# EUROPÄISCHE PATENTSCHRIFT

(11) **EP 1 917 173 B1**
(45) Veröffentlichungstag und Bekanntmachung des Hinweises auf die Patenterteilung: **25.03.2009**
(21) Anmeldenummer: 07722984.7
(22) Anmeldetag: 26.02.2007
(51) Int. Cl.: B62D 1/04, B60R 21/05, B62D 65/14

(54) **VERFAHREN ZUR HERSTELLUNG EINES LENKRADES UND DURCH DAS VERFAHREN HERGESTELLTES LENKRAD**
METHOD FOR PRODUCING A STEERING WHEEL, AND STEERING WHEEL PRODUCED BY MEANS OF THE METHOD
PROCEDE DE FABRICATION D'UN VOLANT DE DIRECTION ET VOLANT DE DIRECTION FABRIQUE A L'AIDE DU PROCEDE

(30) Priorität: 27.02.2006 DE 102006010155
(43) Veröffentlichungstag der Anmeldung: 07.05.2008
(73) Patentinhaber: Takata-Petri AG, 63743 Aschaffenburg (DE)
(72) Erfinder: HAART, Christian, 63785 Obernburg (DE); KOLB, Jürgen, 63743 Aschaffenburg (DE); HENNING, Daniel, 63741 Aschaffenburg (DE)
(74) Vertreter: Baumgärtel, Gunnar
(86) Internationale Anmeldenummer: PCT/EP2007/001739
(87) Internationale Veröffentlichungsnummer: WO 2007/098940

(56) Entgegenhaltungen:
- EP-A2- 0 997 368
- EP-A2- 1 211 154
- DE-A1- 10 155 859
- DE-U1- 29 515 265
- DE-U1- 29 813 895
- US-A- 6 079 292
- US-A1- 2004 050 204

## Beschreibung

Die Erfindung betrifft ein Verfahren zur Herstellung eines Lenkrades gemäss dem Oberbegriff des Anspruchs 1 sowie ein mittels des Verfahrens hergestelltes Lenkrad gemäß dem Oberbegriff des Anspruchs 26.

Derartige Lenkräder sind um eine Lenkachse drehbar an einem Kraftfahrzeug lagerbar und umfassen als wesentliche Elemente einen Lenkradkranz, der die Lenkachse entlang einer Umfangsrichtung umläuft und zum Betätigen des Lenkrades dient, sowie Speichen zum Verbinden des Lenkradkranzes mit einer Nabe des Lenkrades, über die das Lenkrad am Kraftfahrzeug lagerbar ist. Die einzelnen Speichen des Lenkrades münden von der Nabe ausgehend quer zur Umfangsrichtung des Lenkradkranzes in den Lenkradkranz ein.

Bekannte Lenkräder weisen ein Lenkradskelett bestehend aus einem Lenkradkranzskelett als einem Grundkörper des Lenkradkranzes und von dem Lenkradkranzskelett abragende Streben als Grundkörper der Speichen des Lenkrades auf. Am Lenkradskelett ist zumindest ein Lenkradhüllenelement befestigt, mit einer dem Lenkradskelett zugewandten Innenseite und einer der Innenseite abgewandten Außenseite, das als ein Träger einer äußeren sichtbaren Schicht des Lenkrades (z.B. einer Lederummantelung) dient, die mit der Außenseite des Lenkradhüllenelementes verbunden ist.

Bei bekannten Herstellungsverfahren wird das Lenkradhüllenelement direkt an das Lenkradskelett angeschäumt. Die äußere sichtbare Schicht des Lenkrades wird separat angefertigt und dann an dem fest mit dem Lenkradskelett verbundenen Lenkradhüllenelement befestigt. Hierzu werden beispielsweise einzelne gestanzte Lederteile einer auszubildenden äußeren Schicht des Lenkrades zu einem in sich geschlossenen Lederstreifenring zusammengenäht, der über das umschäumte Lenkradkranzskelett gezogen und dort positioniert wird. Der Lederstreifenring und der Lenkradschäumling (Lenkradkranzskelett mit angeschäumten Lenkradhüllenelement) werden mit einem. Klebstoff verklebt. Anschließend wird das Leder an den Stoßstellen vernäht. Zusätzlich kann das Leder (z.B. bei Faltenbildung) einer Wärmebehandlung unterzogen werden, so dass der Lederstreifenring durch den hierdurch bewirkten Feuchtigkeitsentzug schrumpft. Eine derartige Behandlung kann auch auf einzelne Bereiche des Lenkrades beschränkt werden.

Nachteilig an dem vorstehenden Verfahren sind der durch die gesonderte Herstellung der gesamten äußeren Schicht bedingte Materialverschnitt und die hiermit verbundenen höheren Materialkosten. Zudem können Lederfehler oft erst nach der Belederung erkannt werden. Unterschiedliche Dehnungsmerkmale können ferner dazu führen, dass eine vollständige Lederbeschichtung komplett ausgetauscht werden muss.

Aus der EP 1 211 154 A2 ist ein Fahrzeuglenkrad nach dem Oberbegriff des Anspruchs 26 und ein Verfahren zur Herstellung eines Fahrzeuglenkrades nach dem Oberbegriff des Anspruchs 1 bekannt. Dabei wird das Lenkradskelett aus einem Stück durch Gießen oder Spritzen hergestellt und unmittelbar auf dem Lenkradkranz wird eine Zwischenlage aus Weichschaum und auf diese wiederum ein Leder geklebt, so dass ein Umschäumen oder Umspritzen des Lenkradkranzes entfallen kann.

Der Erfindung liegt das Problem zu Grunde, ein Verfahren zur Herstellung eines Lenkrades und ein gemäß diesem Verfahren hergestelltes Lenkrad bereitzustellen, bei dem eine kostengünstige und einfache Beschichtung des Lenkrades gewährleistet ist.

Dieses Problem wird durch ein Verfahren zur Herstellung eines Lenkrades mit den Merkmalen des Anspruchs 1, sowie durch ein Lenkrad mit den Merkmalen des nebengeordneten Anspruchs 26 gelöst.

Das erfindungsgemäße Verfahren sieht die folgenden Schritte vor:
- Bereitstellen eines Lenkradskeletts als einem Grundkörper des herzustellenden Lenkrades,
- Bereitstellen eines oder mehrerer am Lenkradskelett zu befestigender Lenkradhüllenelemente als Träger einer äußeren, sichtbaren Schicht des Lenkrades,
wobei die Gesamtheit der Lenkradhüllenelemente im am Lenkradskelett befestigten Zustand zumindest einen Teilbereich des Lenkradskeletts im Querschnitt im Wesentlichen vollständig umgreift und die Lenkradhüllenelemente jeweils eine dem Lenkradskelett zugewandte Innenseite und eine der Innenseite abgewandte Außenseite aufweisen,
- Verbinden einer äußeren Schicht mit der Außenseite des mindestens einen Lenkradhüllenelementes, wobei die äußere Schicht im am Lenkradskelett befestigten Zustand des mindestens einen Lenkradhüllenelementes zumindest einen Teilbereich des Lenkradskeletts im Querschnitt im Wesentlichen vollständig umgreift, und
- Anordnen und Befestigen des mindestens einen Lenkradhüllenelementes am Lenkradskelett, nachdem die äußere Schicht mit der Außenseite des mindestens einen Lenkradhüllenelementes verbunden worden ist,-**dadurch gekennzeichnet, dass** das mindestens eine Lenkradhüllenelement im Querschnitt zwei einander gegenüberliegende und einstückig miteinander verbundene Schenkel aufweist, die zum Umklammern oder Umgreifen des Lenkradskeletts auseinandergebogen werden.

Die Schenkel weisen jeweils ein freies Ende auf, wobei die freien Enden - in einem Zustand, in dem das Lenkradhüllenelement das Lenkradskelett umgreift - aneinander anliegen, so dass das Lenkradhüllenelement das Lenkradskelett im Querschnitt vorzugsweise um 360° umgreift..

Unter einem im Wesentlichen vollständigen Umgreifen des Lenkradskeletts (bezüglich des Querschnittes des Lenkradskeletts) durch die Lenkradhüllenelemente bzw. die äußere Schicht, wird ein Umgreifen des Lenkradskeletts um 360° verstanden, wobei natürlich die Lenkradhüllenelemente bzw. die äußere Schicht das Lenkradskelett bis auf Lücken umgreifen können, die durch aneinandergrenzende Stirnseiten von Lenkradhüllenelementen gebildet werden bzw. durch aneinander angrenzende Stirnseiten von Bestandteilen der äußeren Schicht des Lenkrades, z.B. aneinander angrenzende einzelne Schichtelemente, aus denen die äußere Schicht aufgebaut ist. Weiterhin wird unter einem Querschnitt des Lenkradskeletts ein Querschnitt des Lenkradkranzskeletts oder einer Strebe des Lenkradsketetts verstanden, wobei die Querschnittsebene jeweils senkrecht zur Umfangsrichtung des Lenkradkranzskeletts bzw. senkrecht zu einer Erstreckungsrichtung, entlang der sich die Strebe längs erstreckt, orientiert ist.

Durch die vorstehenden Schritte des erfindungsgemäßen Verfahrens ist es möglich, die äußere Schicht prozesssicher und kostengünstig an jeweils vorbestimmbaren Positionen des Lenkrades anzubringen. Hierdurch entfällt gegenüber bekannten Verfahren der komplexe Arbeitsschritt des Zusammensetzens der äußeren Schicht bevor diese mit der Lenkradhülle verbunden wird.

Vorzugsweise wird die äußere Schicht derart ausgebildet, dass sie die Außenseite des mindestens einen Lenkradhüllenelementes nach dem Verbinden mit der Außenseite überdeckt. D.h., eine flexible äußere Schicht, wie beispielsweise Leder, wird kongruent zur Außenseite des Lenkradhüllenelementes zugeschnitten, wobei ein Überschuss vorgesehen werden kann, so dass ein-äußerer-Rand einer derartigen äußeren Schicht eingeschlagen werden kann.

Bevorzugt wird bzw. werden das eine oder die mehreren Lenkradhüllenelemente derart am Lenkradskelett befestigt, dass die Gesamtheit der Lenkradhüllenelemente das Lenkradskelett im Wesentlichen vollständig umgibt. D.h., die Gesamtheit der Lenkradhüllenelemente schließt das Lenkradskelett, also das Lenkradkranzskelett und die Streben, vollständig, d.h., bis auf Lücken, die durch aneinandergrenzende Stirnseiten jener Hüllenelemente gebildet werden, ein. Hierbei kann auch die Nabe des Lenkrades mittels eines oder mehrerer Lenkradhüllenelemente unter Ausbildung eines Nabenkörpers des Lenkrades verkleidet werden.

Besonders bevorzugt wird die äußere Schicht aus einem flexiblen Material, insbesondere aus einem Leder ausgebildet. Das erfindungsgemäße Verfahren eignet sich allerdings auch zur Verarbeitung anderer Materialien für die äußere Schicht, darunter auch Holz und Stein.

Die äußere Schicht weist vorzugsweise eine Innenseite auf, die zum Verbinden mit der Außenseite des mindestens einen Lenkradhüllenelementes derart vorgeformt wird, dass sie einem räumlichen Verlauf der Außenseite des Lenkradhüllenelementes folgt. Bei einem Leder beispielsweise, kann ein derartiges Vorformen durch eine Wärmebehandlung des Leders bei gleichzeitigem Fixieren des Leders in der gewünschten Form bewirkt werden.

Zum Verbinden der äußeren Schicht mit dem mindestens einem Lenkradhüllenelement wird diese bevorzugt stoffschlüssig, z.B. mittels eines Klebstoffes, mit der Außenseite des -mindestens einen Lenkradhüllenelementes verbunden. Dieses wird bevorzugt über seine Innenseite formschlüssig mit dem Lenkradskelett verbunden. In einer weiteren Variante der Erfindung wird das mindestens eine Lenkradhüllenelement über seine Innenseite stoffschlüssig mit dem Lenkradskelett verbunden. Alternativ wird über die Innenseite eine kraftschlüssige Verbindung zwischen dem mindestens einen Lenkradhüllenelement und dem Lenkradskelett hergestellt.

Bevorzugt wird eine Mehrzahl an Lenkradhüllenelementen bereitgestellt, die jeweils verschiedenen Bereichen des Lenkradskeletts zugeordnet werden. Ebenso wird auch die äußere Schicht in einer Variante des erfindungsgemäßen Verfahrens aus einer Mehrzahl von Schichtelementen ausgebildet. Vorzugsweise wird den einzelnen Lenkradhüllenelementen jeweils zumindest eines der Schichtelemente zugeordnet.

Weiterhin werden die Schichtelemente bevorzugt derart ausgebildet, dass sie die Außenseiten der Lenkradhüllenelemente nach dem Verbinden der Schichtelemente mit den Außenseiten der Lenkradhüllenelemente überdecken.

In einer Variante des erfindungsgemäßen Verfahrens wird zumindest ein Einlegeelement bereitgestellt, das dazu dient, nach dem Befestigen eines oder mehrerer Lenkradhüllenelemente an dem Lenkradskelett in einem Spalt angeordnet zu werden, der durch einander zugewandte Seiten eines oder mehrerer an dem mindestens einen Lenkradhüllenelement befestigter Schichtelemente gebildet wird. Derartige Einlegeelemente können weiterhin als Dekorelemente ausgebildet sein. Es ist beispielsweise möglich, dass die Lenkradhüllenelemente derart am Lenkradskelett bzw. die Schichtelemente derart an den Lenkradhüllenelementen befestigt werden, dass sich ein Spalt der vorstehenden Art z.B. in der Umfangsrichtung entlang des Lenkradkranzes erstreckt, so dass ein umlaufender Dekorring, beispielsweise aus einem Holz, in dem Spalt angeordnet werden kann. Derartige Einlegeelemente werden weiterhin bevorzugt formschlüssig mit einem auszufüllenden Spalt ausgebildet und bevorzugt mittels eines Klebemittels in dem Spalt festgelegt. Diesbezüglich sind natürlich auch andere Befestigungsmittel, wie beispielsweise Rastmittel, denkbar.

In einer besonders bevorzugten Variante der Erfindung wird die Querschnittskontur des Lenkradskeletts derart ausgeformt, beispielsweise durch Schäumen eines Mantels des Lenkradskeletts in einer Form, dass sie von einer kreisförmigen-Querschnittskontur abweicht, um ein Verdrehen der am Lenkradskelett bzw. Lenkradkranzskelett zu befestigenden Lenkradhüllenelemente quer zur Umfangsrichtung des Lenkradkranzes zu verhindern. Hierbei ist die Querschnittskontur vorzugsweise polygonförmig, insbesondere rechteckförmig ausgebildet, wobei die Ecken einer solchen polygonalen Querschnittskontur durchaus abgerundet sein können.

In einer Variante des Verfahrens beinhaltet der Schritt des Bereitstellens des Lenkradskeletts die folgenden Schritte:
- Bereitstellen eines Kerns des Lenkradskeletts, insbesondere aus einem Metall, und
- Umgeben des Kerns mit einem Mantel, insbesondere aus einem Schaum (z.B. PU-Schaum) zum Ausbilden des eigentlichen Lenkradskeletts, so dass der Mantel den Kern zumindest abschnittsweise im Querschnitt vollständig umschließt. Bevorzugt umschließt der Mantel einen dem Lenkradkranz zugeordneten Teil des Kerns vollständig (bis auf Stellen an denen Speichen in den Lenkradkranz münden).

Das Verfahren sieht in einer Variante weiterhin vor, dass am Lenkradskelett von diesem abstehende Vorsprünge als Ankerstellen vorgesehen werden, die dazu ausgebildet sind, in entsprechende Ausnehmungen der Innenseite des zumindest einen Lenkradhüllenelementes einzugreifen, so dass Längenänderungen der Lenkradhüllenelemente durch klimatische Einflüsse (Erwärmen und Abkühlen) verhindert werden. Dabei werden die Vorsprünge bevorzugt an demjenigen Teil des Lenkradskeletts vorgesehen, der einen Grundkörper für den Lenkradkranz des Lenkrades bildet, d.h., am Lenkradkranzskelett.

Besonders bevorzugt werden jene als Ankerstellen wirkenden Vorsprünge einstückig mit dem Mantel ausgebildet, beispielsweise in dem der Mantel in einer entsprechenden Form geschäumt oder spritzgegossen wird.

Alternativ oder zusätzlich zu den Ankerstellen in Form von Vorsprüngen wird auf einer nach außen gewandte Außenseite (Oberfläche) des Lenkradskeletts, insbesondere des Mantels, eine rauhe und / oder genarbte Oberflächenstruktur ausgebildet. Im Vergleich zur Rauhigkeit, die eine Feinstruktur der Oberfläche bildet, ist die Narbung gröber ausgebildet, stellt also eine Grobstruktur der besagten Außenseite bereit. Die Innenseite der Lenkradhüllenelemente kann in gleicher Weise ausgebildet werden.

Durch die bereitgestellte Rauhigkeit und / oder Narbung der Außenseite des Mantels bzw. der Innenseite der Lenkradhülenelemente wird zwischen dem Lenkradskelett (Mantel) einerseits und den Lenkradhüllenelementen andererseits eine vergrößerte Reibung bereitgestellt, die ebenfalls einer klimatisch bedingten Längenänderung der am Lenkradskelett festgelegten Lenkradhüllenelemente entgegenwirkt.

Weiterhin wird das der Erfindung zu Grunde liegende Problem durch ein Lenkrad mit den Merkmalen des Anspruchs 26 gelöst.

Bei einem derartigen Lenkrad für ein Kraftfahrzeug, mit einem Lenkradskelett als einem Grundkörper des Lenkrades, mit einem oder mehreren am Lenkradskelett befestigten Lenkradhüllenelementen als Träger einer äußeren, sichtbaren Schicht des Lenkrades, die in ihrer Gesamtheit zumindest einen Teilbereich des Lenkradskeletts im Querschnitt im Wesentlichen vollständig umgreifen und jeweils eine dem Lenkradskelett zugewandte Innenseite und eine der Innenseite abgewandte Außenseite aufweisen, und mit einer äußeren Schicht, die mit der Außenseite des mindestens einen Lenkradhüllenelementes verbunden ist, wobei die äußere Schicht zumindest einen Teilbereich des Lenkradskeletts im Querschnitt im Wesentlichen vollständig umgreift, wobei das mindestens eine Lenkradhüllenelement dazu ausgebildet ist, am Lenkradskelett angeordnet und festgelegt zu werden, nachdem die äußere Schicht mit der Außenseite des mindestens einen Lenkradhüllenelementes verbunden worden ist. Erfindungsgemäß weist das mindestens eine Lenkradhüllenelement zwei einander gegenüberliegende und einstückig miteinander verbundene Schenkel auf, die zum Umklammern oder Umgreifen des Lenkradskeletts auseinandergebogen werden können.

Bevorzugt überdeckt die äußere Schicht die Außenseite des mindestens einen Lenkradhüllenelementes vollständig. Weiterhin sieht eine Variante der Erfindung vor, dass die Gesamtheit der Lenkradhüllenelemente das Lenkradskelett vollständig umgeben, d.h., eine Umhüllung des Lenkradskeletts bilden. Dabei kann auch eine Nabe des Lenkrades durch das oder die Lenkradhüllenelemente eingehüllt sein.

Besonders bevorzugt ist die äußere Schicht aus einem flexiblen Material gefertigt, insbesondere aus einem Leder oder einem in seinen Eigenschaften vergleichbaren Material.

Gemäß einer Ausführungsform der Erfindung ist die äußere Schicht stoffschlüssig mit der Außenseite des mindestens einen Lenkradhüllenelementes verbunden. Weiterhin liegt die Innenseite des mindestens einen Lenkradhüllenelements bevorzugt formschlüssig am Lenkradskelett an. Mit Vorteil ermöglicht der Formschluss eine großflächige Klebeverbindung zwischen dem mindestens einen Lenkradhüllenelement und dem Lenkradskelett. Die Lenkradhülleelemente können natürlich auch mittels (bekannter) alternativer Befestigungsmethoden, z.B. durch Rastmittel oder durch Verschweißen, am Lenkradskelett befestigt werden.

Es können entlang des Lenkradkranzskeletts oder entlang der Streben Abschnitte vorgesehen sein, die im Querschnitt nicht vollständig von einem Lenkradhüllenelement umgriffen werden. Bei derartigen Bereichen kann es sich beispielsweise um Bereiche handeln, an denen die Streben des Lenkradskeletts in das Lenkradkranzskelett einmünden.

In einem Ausführungsbeispiel der Erfindung sind mehrere Lenkradhüllenelemente vorgesehen, wobei sich bevorzugt ein erstes Lenkradhüllenelement entlang eines halben Umfangs eines in sich geschlossenen Lenkradkranzskeletts des Lenkradskeletts erstreckt. Bei dem halben Umfang handelt es sich vorzugsweise um die rechte oder linke Seite des Lenkradkranzskeletts, bezogen auf eine Geradeausfahrtstellung des Lenkrades in einem in ein Kraftfahrzeug eingebauten Zustand des Lenkrades. Hierbei werden die rechte und die linke Seite des Lenkradkranzskeletts bevorzugt durch die Symmetrieebene des Lenkradskeletts definiert, die bei einem Lenkrad in Geradeausfahrtstellung durch die Lenkachse und eine die Lenkachse schneidende Fahrzeugachse aufgespannt wird, die parallel zur vertikalen Fahrzeugachse verläuft.

Vorzugsweise umgreift das erste Lenkradhüllenelement das Lenkradkranzskelett im Querschnitt im Wesentlichen vollständig, wobei entlang des Lenkradkranzskeletts Bereiche vorgesehen sein können, beispielsweise an Stellen, an denen die Streben in das Lenkradkranzskelett übergehen, die nicht vollständig im Querschnitt umgriffen werden.

Weiterhin ist bevorzugt ein zweites Lenkradhüllenelement vorgesehen, dass sich entlang zumindest einer Strebe des Lenkradskeletts erstreckt, die zum Verbinden des Lenkradkranzskeletts mit einer Nabe des Lenkrades dient, wobei das zweite Lenkradhüllenelement die Strebe zumindest abschnittsweise (vorzugsweise entlang einer gesamten Länge der sich zwischen Nabe und Lenkradkranzskelett erstreckenden Strebe) umgreift.

In einer weiteren Variante der Erfindung ist vorgesehen, dass sich das zweite Lenkradhüllenelement entlang der ersten Strebe und entlang einer weiteren zweiten Strebe erstreckt, die ebenfalls zum Verbinden des Lenkradkranzskeletts mit der Nabe des Lenkrades dient, wobei das zweite Lenkradhüllenelement zusätzlich einen entlang der Umfangsrichtung des Lenkradkranzskeletts erstreckten Bereich des Lenkradkranzskeletts überdeckt, der die beiden Streben miteinander verbindet. Dabei umgreift das zweite Lenkradhüllenelement vorzugsweise die beiden Streben im Querschnitt um 360°.

Weiterhin ist ein drittes bzw. viertes Lenkradhüllenelement vorgesehen, das spiegelsymmetrisch (bezüglich der Symmetrieebene des Lenkrades) zum ersten bzw. zweiten Lenkradhüllenelement ausgebildet und am Lenkradskelett festgelegt ist.

In einem Ausführungsbeispiel der Erfindung ist eines (oder auch mehrere) der Lenkradhüllenelemente mittels zumindest eines an der Innenseite des Lenkradhüllenelementes festgelegten Rastmittels am Lenkradskelett befestigt. Bei derartigen Lenkradhüllenelementen kann es sich beispielsweise um solche Lenkradhüllenelemente handeln, die Bereiche des Lenkradkranzskeletts überdecken, die sich am Lenkradkranzskelett zwischen den Streben erstrecken und der Nabe des Lenkrades zugewandt sind.

Bevorzugt greift das zumindest eine Rastmittel zum Verbinden des einen Lenkradhüllenelementes mit dem Lenkradskelett in eine Aussparung des Lenkradskeletts ein.

In einer Variante der Erfindung ist das Lenkradskelett mit Vorteil im Querschnitt U-förmig ausgebildet, wobei die Aussparung zur Befestigung des einen Lenkradhüllenelementes derart am U-förmigen Lenkradskelett ausgebildet ist, dass ein freier Schenkel des U-förmigen Lenkradskeletts der Aussparung entlang einer mit der Aussparung fluchtenden Montagerichtung gegenüberliegt.

Weiterhin ist es vorteilhaft, die äußere Schicht aus einer Mehrzahl von Schichtelementen auszubilden, wobei bevorzugt jeweils mindestens ein Schichtelement mit der Außenseite eines Lenkradhüllenelementes verbunden ist, und zwar bevorzugt derart, dass es die Außenseite des Lenkradhüllenelementes vollständig überdeckt.

Es ist auch möglich, dass die Lenkradhüllenelemente und auch die äußere Schicht des Lenkrades ebenso die Nabe des Lenkrades im Querschnitt umgreifen bzw. vollständig überdecken. Hierbei können die Lenkradhüllenelemente insbesondere auch einen Nabenkörper ausbilden, der beispielsweise als eine Aufnahme für einen Airbag oder sonstige Funktionselemente eines Kraftfahrzeuges dienen kann.

Die Gesamtheit der Lenkradhüllenelemente kann derart am Lenkradskelett angeordnet sein, dass zwischen angrenzenden Seiten der Lenkradhüllenelemente und / oder: zwischen angrenzenden Schichtelementen der äußeren Schicht des Lenkrades entlang des Lenkradkranzes oder entlang der Speichen verlaufende Spalte (oder Lücken) ausgebildet sind, die vorzugsweise durch Einlegeelemente verschlossen sind. Derartige Einlegelemente können insbesondere als Dekorelemente aus Holz, Stein oder Leder ausgebitdet sein, wobei Dekorelemente aus einem Leder in einem in einen Spalt angeordneten Zustand bevorzugt eine sichtbare Naht, beispielsweise eine Steppnaht, als ein Zierelement aufweisen.

Vorzugsweise sind die Lenkradhüllenelemente aus einem Kunststoff, insbesondere einem thermoplastischen Kunststoff oder alternativ bzw. ergänzend aus einem Schaum, insbesondere einem PU-Schaum, gefertigt.

In einer Variante der Erfindung weist das bereitgestellte Lenkradskelett eine Querschnittskontur auf, die zumindest an einer- Stelle von einer kreisförmigen Querschnittskontur abweicht, so dass ein das Lenkradskelett formschlüssig umgreifendes Lenkradhüllenelement quer zur Umfangsrichtung des Lenkradkranzes nicht gegenüber dem Lenkradskelett, und zwar dem Lenkradkranzskelett verdreht werden kann.

Bevorzugt weist das Lenkradskelett eine heterogene Struktur auf, wobei es bevorzugt einen Kern (K) aufweist, der aus einem Metall oder einem Kunststoff (ggf. Verbundwerkstoff) mit vergleichbaren Eigenschaften gefertigt sein kann. Der Kern ist vorzugswetse von einem Mantel umgeben, der den Kern insbesondere dort wo dieser ein Gerüst für das Lenkradkranzskelett bildet vorzugsweise vollständig im Querschnitt einschließt, wobei Bereich des Kerns ausgenommen sind, in die von einem Nabenkörper ausgehende Streben einmünden.

Das Lenkradkranzskelett weist bevorzugt vom Lenkradkranzskelett abragende Vorsprünge auf, die dazu eingerichtet und vorgesehen sind, in entsprechende Ausnehmungen der Innenseite eines Lenkradhüllenelementes einzugreifen. Hierbei greifen bevorzugt zwei Vorsprünge entlang der Umfangsrichtung des Lenkradkranzes beabstandet zueinander in zwei verschiedene, zueinander beabstandete Ausnehmungen eines Lenkradhüllenelementes ein, mit dem Effekt, dass Längenänderungen des betrachteten Lenkradhüllenelementes im Bereich zwischen den Ausnehmungen verhindert werden. Um diesen Effekt zu verstärken, besteht der Mantel des Lenkradskeletts vorzugsweise aus einem Material, dessen Volumen bei Temperaturschwankungen eine signifikant geringere Zu- oder Abnahme zeigt als die Volumina der einzelnen Lenkradhüllenelemente.

Bevorzugt sind die Vorsprünge (A) dazu eingerichtet und vorgesehen kraft- und / oder formschlüssig in die zugeordneten Ausnehmungen einzugreifen. Im Hinblick auf kraftschlüssiges Eingreifen können die Vorsprünge zum Hintergreifen von Bereichen der jeweiligen Ausnehmung ausgebildet sein.

Besonders bevorzugt umlaufen die Vorsprünge das Lenkradkranzskelett (in Form von Wulsten) im Querschnitt, wobei die zugeordneten Ausnehmungen an den Innenseiten der Lenkradhüllenelemente als Nuten ausgebildet sind.

Zum Erhöhen der Reibung zwischen einer Außenseite des Lenkradskeletts (Mantels) weist diese bevorzugt eine feine raue bzw. alternativ oder zusätzlich eine genarbte Struktur auf. Die Innenseite der Lenkradhüllenelemente kann auf gleiche Weise ausgestaltet werden.

Besonders bevorzugt umgreift das mindestens eine Lenkradhüllenelement das Lenkradskelett, insbesondere das Lenkradkranzskelett, vollständig einstückig im Querschnitt. D.h., das mindestens eine Lenkradhüllenelement umläuft das Lenkradkranzskelett im Querschnitt um 360° wobei aneinandergrenzende Stirnseiten des Lenkradhüllenelementes eng aneinander anliegen bzw. über eine Naht miteinander verbunden sind. Bei der Naht kann es sich z.B. um eine Klebe- oder Schweißverbindung (Warmverformung) handeln.

Weitere Einzelheiten und Vorteile der Erfindung werden bei der nachfolgenden Beschreibung von Ausführungsbeispielen anhand der Figuren deutlich werden.

Es zeigen:
- Figur 1: eine Draufsicht auf ein Lenkradskelett, bestehend aus einem Lenkradkranzskelett und Streben, die zum Verbinden des Lenkradkranzskeletts mit einer Nabe dienen,
- Figur 2: eine Draufsicht auf vier Lenkradhüllenelemente,
- Figur 3: die in der Figur 2 gezeigten Lenkradhüllenelemente, deren Außenseiten jeweils mit einem Schichtelement verbunden sind und die an dem in der Figur 1 gezeigten Lenkradskelett befestigt sind,
- Figur 4: einen Abschnitt einer äußeren Schicht des Lenkrades in Form eines Lederelementes, das eine Steppnaht aufweist,
- Figur 5-10: eine schematische Darstellung der Abfolge eines erfindungsgemäßen Verfahrens zur Herstellung eines Lenkrades,
- Figur 11: eine schematische, ausschnitthafte Schnittansicht eines Lenkradhüllenelementes und einem daran befestigten-Schichtelement.
- Figur 12: eine schematische Schnittansicht einer Abwandlung des in der Figur 11 gezeigten Lenkradhüllenelementes in einem an ein Lenkradskelett befestigten Zustand,
- Figur 13: eine weitere Abwandlung des in der Figur 11 bzw. 12 gezeigten Lenkrädhüllenelementes,
- Figur 14: eine schematische Schnittansicht eines Lenkradskeletts der in der Figur 12 gezeigten Art, mit einer Aussparung zur Aufnahme eines-Rastmittels, und
- Figur 15: eine Variante des in der Figur 14 gezeigten Rastmittels,
- Figur 16: eine Variante eines Lenkradskeletts, mit einem Mantel, an dem Vorsprünge in Form von ringförmigen Wülsten vorgesehen sind,
- Figur 17: ein Detail des in der Figur 16 gezeigten Lenkradkranzes, und
- Figur 18: ein Schnitt entlang der Linie XVIII-XVIII der Figur 17, wobei zusätzlich gegenüber der Figur 17 das Lenkradskelett umgebende Lenkradhüllenelemente dargestellt sind.

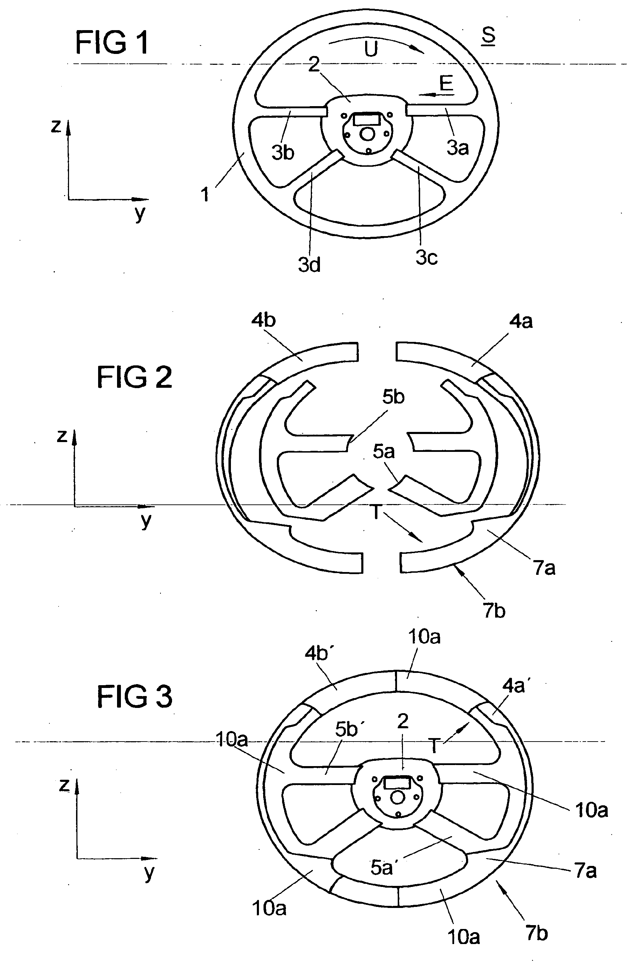

Figur 1 zeigt eine Draufsicht auf ein Lenkradskelett S, bestehend aus einem Lenkradkranzskelett 1, vier Streben 3a, 3b, 3c und 3d, die das Lenkradkranzskelett 1 mit einer Nabe 2 des Lenkrades verbinden. Das Lenkradkranzskelett 1 umläuft entlang einer Umfangsrichtung U eine senkrecht auf der Papierebene stehende Lenkachse, um die das Lenkradskelett S über die Nabe 2 drehbar lagerbar ist. Die vier Streben 3a, 3b, 3c und 3d erstrecken sich jeweils längs einer Erstreckungsrichtung E, entlang der sie jeweils im Wesentlichen quer zur Umfangsrichtung U des Lenkradkranzskeletts 1 in das Lenkradkranzskelett 1 einmünden.

Im Folgenden werden räumliche Angaben bezüglich des Lenkrades und dessen Bestandteilen auf das in ein Kraftfahrzeug eingebautes Lenkrad in einer Geradausfahrtstellung bezogen, und zwar aus der Sicht eines Fahrers des Kraftfahrzeuges. Danach erstreckt sich eine erste Strebe 3a der vier Streben 3a - 3d auf der rechten Seite des kreisförmigen Lenkradkranzskeletts 1 entlang der Fahrzeugquerachse y vom Lenkradkranzskelett 1 zur Nabe 2, und eine weitere, zweite Strebe 3c erstreckt sich, einen spitzen Winkel mit der ersten Strebe 3a einschließend, entlang der vertikalen Fahrzeugachse z unterhalb der ersten Strebe 3a von der Nabe 2 zum Lenkradkranzskelett 1. Die Lage der dritten Strebe 3b sowie der vierten Strebe 3d ergibt sich durch Spiegelung der ersten Strebe 3a bzw. der zweiten Strebe 3c an der Symmetrieebene des Lenkradskeletts S, die durch die Lenkachse und eine parallel zur vertikalen Fahrzeugachse z verlaufende Fahrzeugachse, die die Lenkachse schneidet, aufgespannt wird.

Figur 2 zeigt eine Draufsicht auf vier separate Lenkradhüllenelemente 4a, 4b, 5a und 5b, die zur Befestigung an dem in der Figur 1 gezeigten Lenkradskelett S vorgesehen sind. Diese werden bevor sie am Lenkradskelett S angeordnet und befestigt werden mit einer äußeren, sichtbaren Schicht 10 des Lenkrades verbunden, die z.B. als ein Leder ausgebildet sein kann. Die einzelnen Lenkradhüllenelemente 4a, 4b, 5a und 5b können natürlich auch mit unterschiedlichen, die äußere Schicht 10 bildenden Schichtelementen 10a bezogen werden, die bspw. aneinander angrenzend auf einer zur Befestigung der äußeren Schicht 10 vorgesehenen Außenseite eines Lenkradhüllenelementes befestigt werden. Auf diese Weise können z.B. unterschiedliche Materialien wie Holz, Stein und Leder miteinander kombiniert werden.

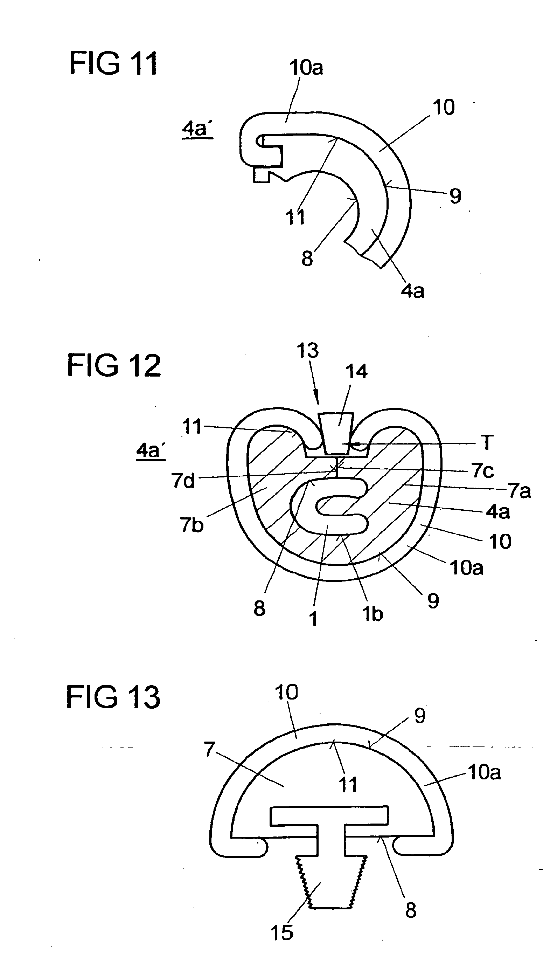

Nachfolgend soll die Anordnung des ersten und des zweiten Lenkradhüllenelementes 4a, 5a auf der rechten Seite des Lenkradskeletts S erläutert werden, die Anordnung auf der linken. Seite ergibt sich wiederum durch Spiegelung der rechten Seite des Lenkradskeletts S (und der daran befestigten Teile) an dessen Symmetrieebene. Gemäß der Figur 3 (im Zusammenhang mit Figur 12) umgeben die mit jeweils einem Schichtelement 10a in Form eines flächigen Lederelementes bezogenen Lenkradhüllenelemente 4a, 4b, 5a und 5b das Lenkradskelett S in einem an dem Lenkradskelett S befestigten Zustand (im Folgenden als Befestigungszustand bezeichnet), wobei das Lenkradkranzskelett 1 und die erste und zweite Strebe 3a, 3c quer zu ihrer jeweiligen Erstreckungsrichtung E durch das erste bzw. zweite Lenkradhüllenelement 4a, 5a umgriffen werden. Dabei dient ein erstes mit einem aus Leder bestehenden Schichtelement 10a bezogenes Lenkradhüllenelement 4a' zum Verkleiden der rechten Hälfte des Lenkradkranzskeletts 1. Hierzu ist das erste Lenkradhüllenelement 4a' schlauchförmig ausgeformt und entsprechend der rechten Hälfte des Lenkradkranzskeletts 1 gekrümmt, d.h., das belederte erste Lenkradhüllenelement 4a' weist eine Innenseite 8 auf, die der Raumform einer nach außen gewandten Außenseite 1b des Lenkradkranzskeletts 1 angepasst ist. Damit das belederte erste Lenkradhüllenelement 4a' auf das Lenkradkranzskelett 1 aufgebracht werden kann, weist es entlang seiner Längserstreckungsrichtung (die im Befestigungszustand entlang der Umfangsrichtung U des Lenkradkranzskeletts 1 verläuft) eine längs erstreckte Öffnung in Form eines Spalts T auf, der aufbiegbar ist, so dass das erste belederte Lenkradhüllenelement 4a' auf das Lenkradkranzskelett 1 aufgeschoben werden kann. An den Bereichen, an denen die erste und die zweite Strebe 3a, 3c in das Lenkradkranzskelett 1 einmünden, ist der Spalt T verbreitert ausgebildet. Mittels eines weiteren, zweiten (belederten) Lenkradhüllenelementes 5a' wird der verbreiterte Bereich des Spaltes T überdeckt, sowie die erste und die zweite Strebe 3a, 3c.

Ein schematischer Querschnitt durch derartige Lenkradhüllenelemente, wie z. B. das erste mit einem Schichtelement 10a versehene Lenkradhüllenelement 4a' der Figur 3, ist in der Figur 12 dargestellt. Demnach weist das erste beschichtete Lenkradhüllenelement 4a' zwei einstückig miteinander entlang der Längserstreckungsrichtung des Lenkradhüllenelementes 4a' erstreckte Schenkel 7a, 7b auf, mit jeweils einem freien Ende 7c, 7d, die den Spalt T beranden und sich in einem Befestigungszustand des Lenkradhüllenelementes 4a gegenüberliegen, wobei sie bevorzugt gemäß der Figur 12 aneinander anliegen. Der Spalt T kann durch Auseinanderbiegen der beiden Schenkel 7a, 7b quer zu seiner Längserstreckungsrichtung derart verbreitert werden, dass das Lenkradhüllenelement 4a das Lenkradkranzskelett 1 umgreifen und einschließen kann. Vorzugsweise besteht das Lenkradhüllenelement 4a' daher aus einem flexiblen PU-Schaum, oder aber die beiden Schenkel 7a, 7b sind über einen flexiblen Bereich miteinander verbunden. Die nötige Flexibilität kann ebenfalls über eine Materialstärke einer Verbindung zwischen den beiden Schenkeln 7a, 7b des Lenkradhüllenelementes 4a' eingestellt werden.

Das auf der dem Lenkradkranzskelett 1 abgewandten Außenseite 9 aufgebrachte Schichtelement 10a, welches aus einem Leder besteht, ist am Spalt T des Lenkradhüllenelementes 4a' in eine den Spalt T verbreiternde Ausnehmung des Lenkradhüllenelementes 4a' eingeschlagen, die durch ein Einlegeelement 14 ausgefüllt ist. Das Einlegeelement 14 kann aus unterschiedlichen Materialien bestehen und wird vorzugsweise in den verbreiterten Teil des Spaltes T eingeklebt, d.h., mit dem Lenkradhüllenelement 4a' und / oder dem Schichtelement 10a stoffschlüssig verbunden.

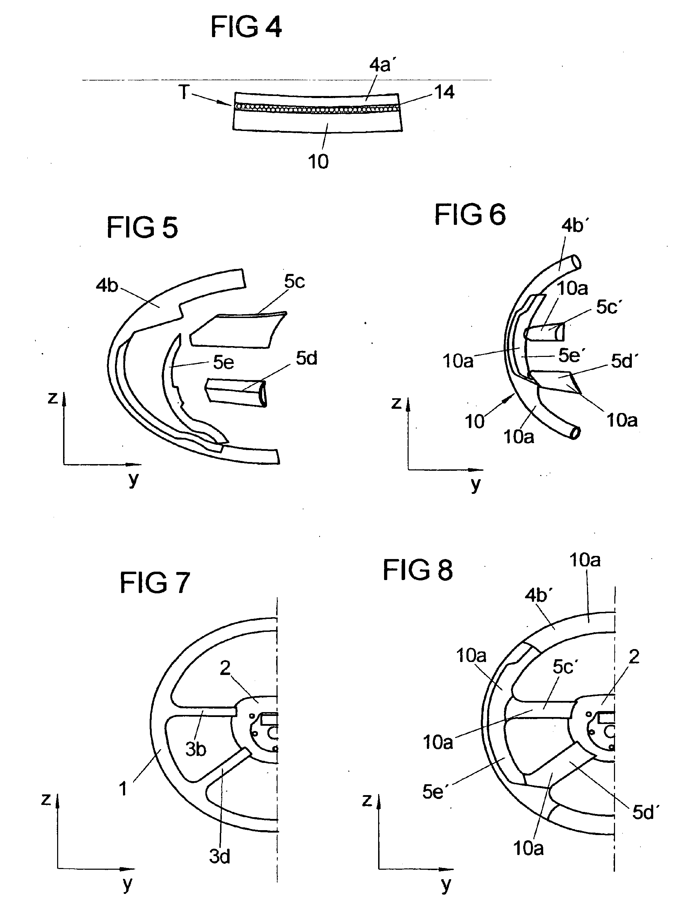

Figur 4 zeigt eine Draufsicht auf ein Einlegeelement 14 mit einer sichtbaren Steppnaht.

Figur 11 zeigt ein Abwandlung eines Lenkradhüllenelementes der in der Figur 12 gezeigten Art, dass im Unterschied zur Figur 12 aus einem steifen Kunststoff geformt ist. Damit derartige Träger einer äußersten Schicht 10 des Lenkrades das Lenkradskelett S umgreifend an diesem befestigt werden können, müssen ggf. zwei z.B. halbschalenförmig ausgebildete Lenkradhüllenelemente 4a bereitgestellt werden, die jeweils etwa die Hälfte eines Querschnitts des Lenkradskeletts S aufnehmen können.

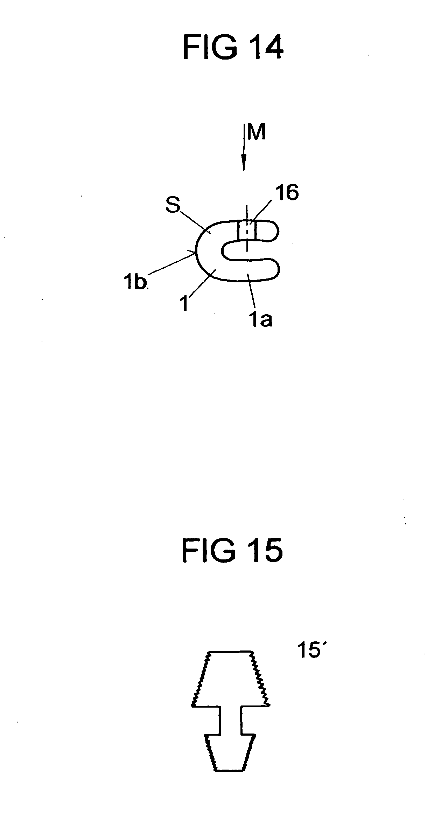

Die beiden Varianten eines Lenkradhüllenelementes gemäß den Figuren 11 und 12 werden vorzugsweise form- und stoffschlüssig mit dem Lenkradskelett S verbunden. Es ist natürlich auch möglich kraftschlüssig wirkende Befestigungsmittel vorzusehen. Ein derartiges Lenkradhüllenelement ist in der Figur 13 im Zusammenhang mit den Figuren 14 und 15 gezeigt. Hierbei wird in das im Querschnitt halbkreisförmige mit dem Schichtelement 10a versehene Lenkradhüllenelement 7 an einer flachen Innenseite 8 des Lenkradhüllenelementes 7, die im Befestigungszustand des Lenkradhüllenelementes 7 dem Lenkradkranzskelett 1 zugewandt ist, ein Rastmittel 15 verankert, dass mit einem verbreiterten freien Ende in eine Aussparung 16 des Lenkradkranzskeletts 1 eingreifen und dort einrastet kann. Das Lenkradkranzskelett 1 des Lenkradskeletts S ist hierbei im Querschnitt U-förmig ausgeformt, und die Aussparung 16 ist derart am im Querschnitt U-förmige Lenkradkranzskelett 1 ausgebildet, dass ein freier Schenkel 1a des Lenkradkranzskeletts 1 der Aussparung 16 entlang einer mit der Aussparung 16 fluchtenden Montagerichtung M, entlang der das Rastmittel 15 in die Aussparung 16 eingeführt wird, gegenüberliegt.

Gemäß Figur 15 ist es auch möglich, alternativ ein Rastmittel 15' vorzusehen, dass zwei einander gegenüberliegende verbreiterte freie Enden aufweist, die jeweils in einer Aussparung der Innenseite 8 und einer Aussparung des Lenkradkranzskeletts 1 einrasten, so dass eine Verbindung zwischen dem Lenkradhüllenelement 7 und dem Lenkradkranzskelett 1 hergestellt ist. Vorzugsweise dienen Lenkradhüllenelemente 7 der in der Figur 13 gezeigten Art zum Verkleiden von Bereichen des Lenkradkranzskelettes 1, die der Nabe 2 des Lenkrades zugewandt sind und an denen die Streben 3a bis 3d in das Lenkradkranzskelett 1 einmünden.

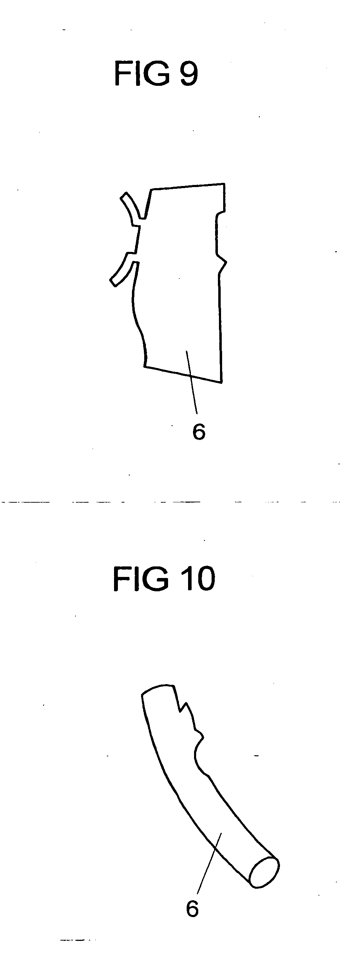

Figur 5 zeigt im Zusammenhang mit den Figuren 6 bis 10 einen schematische Abfolge der einzelnen Schritte eines Herstellungsverfahrens für ein Lenkrad eines Kraftfahrzeuges. Zunächst werden gemäß Figur 5 die einzelnen Lenkradhüllenelemente 5c, 5d, 5e und 4b bereitgestellt, die denen in der Figur 2 dargestellten Lenkradhüllenelementen entsprechen, wobei im Unterschied zur Figur 2, dass für die dritte und vierte Strebe 3b, 3d bestimmte vierte Lenkradhüllenelement 5b (bzw. das nicht gezeigte zweite Lenkradhüllenelement 5a) in drei Teile 5c, 5d und 5e aufgeteilt ist, von denen ein erster Teil 5c zur Ummantelung der dritten Strebe 3b, ein zweiter Teil 5d zur Ummantelung der vierten Strebe 3d des Lenkradskeletts S und ein dritter Teil 5e zum Überdecken eines der Nabe 2 zugewandten Bereiches des Lenkradkranzskelett 1 vorgesehen ist, an dem die dritte und die vierte Strebe 3b, 3d in das Lenkradkranzskelett 1 übergehen. Bevor das dritte Lenkradhüllenelement 4b (welches spiegelsymmetrisch zum ersten Lenkradhüllenelement 4a ausgebildet ist) und das dreigeteilte vierte Lenkradhüllenelement 5c, 5d, 5e an den dafür vorgesehenen Bereichen des Lenkradskeletts S gemäß den Figuren 7 und 8 angeordnet werden, werden die Außenseiten der Lenkradhüllenelemente 4b, 5c, 5d, 5e jeweils mit einem ledernen Schichtelement 10a derart verbunden, dass die Außenseiten 9 durch die Schichtelemente 10a überdeckt sind. Vor einem Verbinden der Schichtelemente 10a mit den Außenseiten 9 der Lenkradhüllenelemente 4b, 5c, 5d, 5e können diese; wie die Figuren 9 und 10 exemplarisch an einem Schichtelement 6 zeigen, jeweils vorgeformt werden, so dass ein für das jeweilige Lenkradhüllenelement 4b, 5c, 5d, 5e bestimmtes Schichtelement 10a jeweils eine zur Befestigung an einer der Außenseiten 9 der Lenkradhüllenelemente 4b, 5c, 5d, 5e vorgesehene Innenseite 11 aufweist, die der Raumform der jeweiligen Außenseite angepasst ist. Durch diese Vorformung wird eins Rücksetellfähigkeit der Schichtelemente (in der Regel Leder) verringert, was das Beziehen der Lenkradhüllenelemente 4b, 5c, 5d, 5e sehr erleichtert.

Nachdem das (nicht gezeigte) erste und das (nicht gezeigte) dreigeteilte zweite Lenkradhüllenelement 4a, 5a sowie das dritte Lenkradhüllenelemente 4b und das vierte Lenkradhüllenelement 5b, bestehend aus den Teilen 5c, 5d, 5e mit den zugeordneten Schichtelementen 10a verbunden worden sind, vorzugsweise durch Verkleben, erfolgt die Anordnung und Befestigung der vorstehenden Lenkradhüllenelemente an den vorbestimmten Bereichen des Lenkradskeletts S. Anschließend können zwischen angrenzenden Schichtelementen 10a bzw. zwischen angrenzenden freien Enden der Schenkel der Lenkradhüllenelemente ausgebildete Lücken, wie z. B. der in der Figur 12 dargestellte Spalt T, der zwischen-den freien Enden 7c, 7d der beiden Schenkel 7a, 7b des ersten Lenkradhüllenelementes 4a ausgebildet ist, mittels Einlegeelementen 14 der in der Figur 12 gezeigten Art verschlossen und verziert werden.

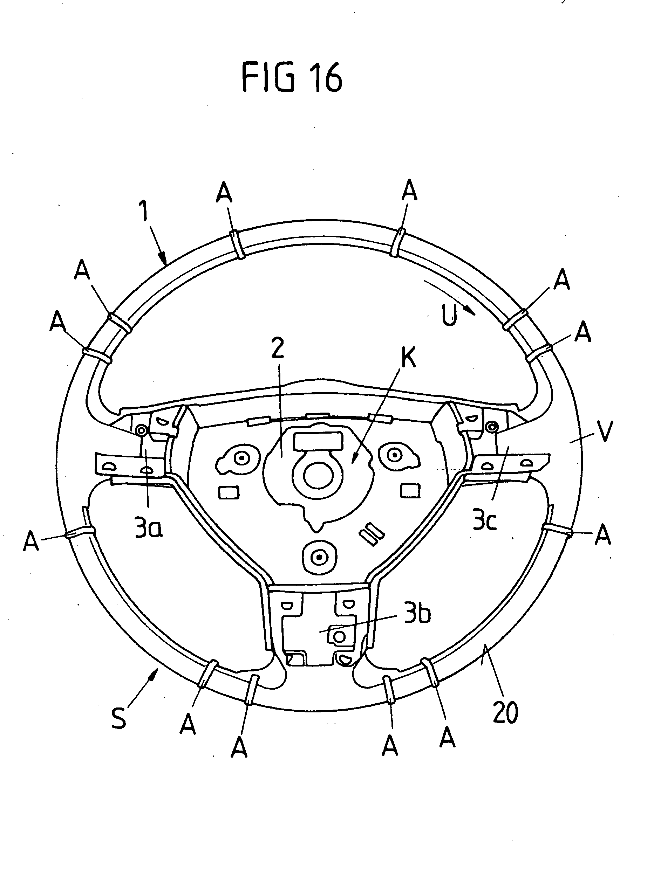

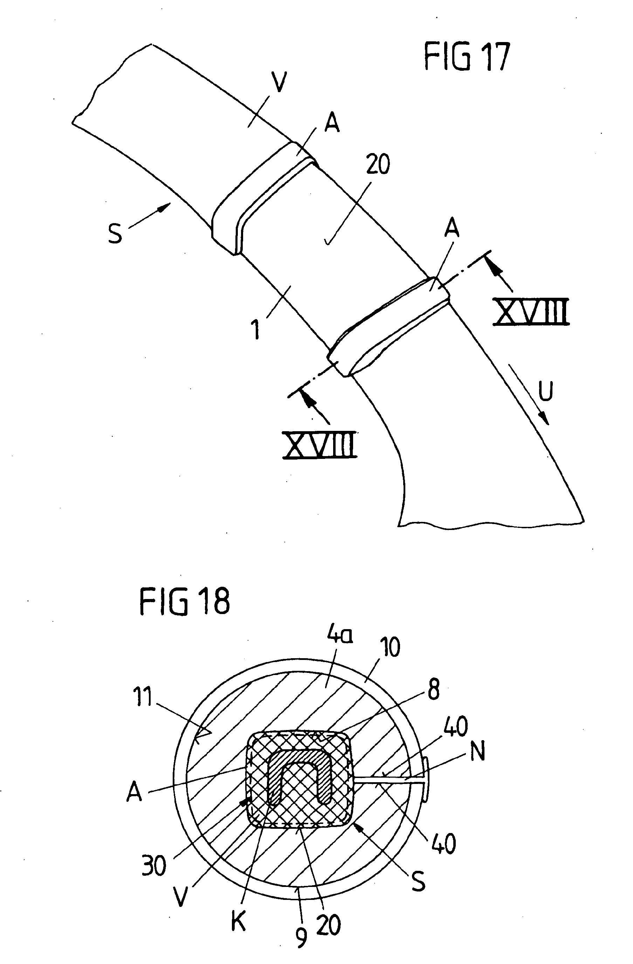

Figur 16 zeigt im Zusammenhang mit den Figuren 17 und 18 eine Abwandlung des in der Figur 12 gezeigten Lenkrades bzw. Lenkradskeletts S.

Dabei weist das Lenkradskelett S der Figur 16 einen zweikomponentigen Aufbau auf, nämlich einen Kern K als Gerüst und einen den Kern K teilweise umgebenen Mantel V. Der Kern K besteht vorzugsweise aus einem Metall und umfasst die Nabe 2 sowie davon abgehende Elemente als Gerüst für drei Streben 3a, 3b und 3c des Lenkradskeletts, die die Nabe 2 mit einem weiteren Teil des Kerns K verbinden, der ein Gerüst für das Lenkradkranzskelett 1 bereitstellt.

Auf den Kern K des Lenkradskeletts S (das auch als Vorschäumling bezeichnet wird) ist der Mantel V aufgebracht, der vorzugsweise an den Kern K angeschäumt wird. Insbesondere im Bereich des Lenkradkranzskeletts 1 umgibt der Mantel V den Kern K vollständig, d.h., er schließt diesen ein.

Der Mantel V dient als Träger der Lenkradhüllenelemente 4a, die diesen vorzugsweise einstückig im Querschnitt eng anliegend umgreifen und damit auch am Mantel V festgelegt sind. Dabei sind aneinander angrenzende bzw. einander gegenüberliegende Stirnseiten eines das Lenkradkranzskelett 1 vollständig (einstückig) umlaufenden Lenkradhüllenelementes 4a über eine Naht N miteinander verbunden, die eine flächige Verbindung zwischen jenen Stirnseiten 40 einschließlich der äußeren Schicht 10, die ebenfalls einstückig umläuft und insbesondere kongruent auf das Lenkradhüllenelement 4a aufgebracht ist, bereitstellt.

Damit insbesondere bei einstückig das Lenkradkranzskelett 1 umgreifenden Lenkradhüllenelementen 4a ein Verdrehen jener Lenkradhüllenelemente 4a quer zur Umfangsrichtung U gegenüber dem Lenkradkranzskelett 1 bzw. dem Mantel V wirksam verhindert werden kann, weist das Lenkradkranzskelett 1 (d.h., der Mantel V) eine äußere Querschnittkontur in Form eines abgerundeten Rechtecks auf.
Der Kern K weist demgegenüber im Lenkradkranzbereich einen u-förmigen Querschnitt auf, so dass der Mantel V mechanisch stabil an den Kern K angeschäumt werden kann.

Zur Verbesserung des Reibschlusses zwischen den am Mantel V festzulegenden Lenkradhüllenelementen 4a und dem Mantel V, weist eine nach außen gewandte Außenseite 20 (Oberfläche) des Mantels V eine Narbung mit hohem Reibungskoeffizienten auf. Ein derartige reibungsverstärkende Oberfläche kann auch durch eine vergleichsweise feinere Oberflächenstruktur (Rauhigkeit) der Außenseite 20 bereitgestellt werden.

Aufgrund des verbesserten Reibschlusses können die mit einer äußeren Schicht 10 (z.B. Leder, Holz etc.) beschichteten Lenkradhüllenelemente 4a derart am Lenkradskelett S verankert werden, dass klimatisch bedingte Längenänderungen der beschichteten Lenkradhüllenelemente 4a entlang des Lenkradskeletts S vermindert werden.

Des Weiteren sind am Mantel V entlang der Umfangsrichtung U des Lenkradkranzskeletts 1 einstückig angeformte Vorsprünge A in Form von ringförmigen Wülsten vorgesehen, die entlang der Umfangsrichtung U am Lenkradkranzskelett 1 verteilt angeordnet sind. Dabei umläuft jeder ringförmige Vorsprung A das im Querschnitt rechteckförmige Lenkradkranzskelett 1 vollständig um 360°, d.h., in sich geschlossen.

Jedem Lenkradhüllenelement 4a sind zumindest zwei Vorsprünge A zugeordnet, die in Ausnehmungen 30 der Innenseite 8 des jeweiligen Lenkradhüllenelementes 4a eingreifen, die an einander entlang der Umfangsrichtung U gegenüber liegenden, das Lenkradkranzskelett 1 umlaufenden Randabschnitten des jeweiligen Lenkradhüllenelementes 4a vorgesehen sind. Dabei sind diese Ausnehmungen 30 in Form von der Außenseite 20 zugewandten Nuten ausgebildet, die das Lenkradkranzsketett 1, entsprechend dem jeweils zugeordneten Vorsprung A, ringförmig umlaufen.

Somit sind jene Vorsprünge A an Stellen, an denen zwei Lenkradhüllenelemente 4a entlang der Umfangsrichtung U aneinander angrenzen, paarweise benachbart zueinander angeordnet.

Die in die mindestens zwei Nuten 30 eingreifenden Vorsprünge A des Mantels V verhindern eine Längenänderung des jeweiligen Lenkradhüllenelementes 4a aufgrund von Temperaturschwankungen. Derartige Längenänderungen können insbesendere durch Beschichten der Lenkradhüllenelemente 4a mit einer äußeren (sichtbaren) Schicht 10 aus natürlichen Materialien entstehen, die einen verhältnismäßig hohen Ausdehnungskoeffizienten aufweisen.

## Patentansprüche

1. Verfahren zur Herstellung eines Lenkrades, mit folgenden Schritten:
- Bereitstellen eines Lenkradskeletts (S) als einem Grundkörper des herzustellenden Lenkrades,
- Bereitstellen eines oder mehrerer am Lenkradskelett (S) zu befestigender Lenkradhüllenelemente (4a, 4b, 5a, 5b) als Träger einer äußeren, sichtbaren Schicht (10) des Lenkrades, wobei die Gesamtheit der Lenkradhüllenelemente (4a, 4b, 5a, 5b) im befestigten Zustand zumindest einen Teilbereich des Lenkradskeletts (S) im Wesentlichen vollständig umgreift und die Lenkradhüllenelemente (4a, 4b, 5a, 5b) jeweils eine dem Lenkradskelett (S) zugewandte Innenseite. (8) und eine der Innenseite (8) abgewandte Außenseite (9) aufweisen,
- Verbinden einer äußeren Schicht (10) mit der Außenseite (9) des mindestens einen Lenkradhüllenelementes (4a, 4b, 5a, 5b), wobei die äußere Schicht (10) im befestigten Zustand des mindestens einen Lenkradhüllenelementes (4a, 4b, 5a, 5b) zumindest einen Teilbereich des Lenkradskeletts (S) im Wesentlichen vollständig umgreift, und
- Anordnen und Befestigen des mindestens einen Lenkradhüllenelementes (4a, 4b, 5a, 5b) am Lenkradskelett (S), nachdem die äußere Schicht (10) mit der Außenseite (9) des mindestens einen Lenkradhüllenelementes (4a, 4b, 5a, 5b) verbunden worden ist, **dadurch gekennzeichnet, dass**
das mindestens eine Lenkradhüllenelement (4a, 4b, 5a, 5b) zwei einander gegenüberliegende und einstückig miteinander verbundene Schenkel (7a, 7b) aufweist, die zum Umgreifen des Lenkradskeletts (S) auseinander gebogen werden.

2. Verfahren nach Anspruch 1, **dadurch gekennzeichnet, dass** die äußere Schicht (10) derart ausgebildet wird, dass sie die Außenseite (9) des mindestens einen Lenkradhüllenelementes (4a, 4b, 5a, 5b) nach dem Verbinden mit der Außenseite (9) überdeckt.

3. Verfahren nach einem der Ansprüche 1 oder 2, **dadurch gekennzeichnet, dass** das eine oder die mehreren Lenkradhüllenelemente (4a, 4b, 5a, 5b) derart am Lenkradskelett (S) befestigt werden, dass die Gesamtheit der Lenkradhüllenelemente (4a, 4b, 5a, 5b) das Lenkradskelett (S) im Wesentlichen vollständig umgibt.

4. Verfahren nach einem der Ansprüche 1 bis 3, **dadurch gekennzeichnet, dass** die äußere Schicht (10) aus einem flexiblen Material, insbesondere aus einem Leder ausgebildet wird.

5. Verfahren nach einem der vorangegangenen Ansprüche, **dadurch gekennzeichnet, dass** die äußere Schicht (10) eine Innenseite (11) aufweist, die zum Verbinden mit der Außenseite (9) des mindestens einen Lenkradhüllenelementes (4a, 4b, 5a, 5b) vorgesehen ist, und dass die Innenseite (11) derart vorgeformt wird, dass sie im Wesentlichen einem räumlichen Verlauf der Außenseite (9) des mindestens einen Lenkradhüllenelementes (4a, 4b, 5a, 5b) folgt.

6. Verfahren nach einem der vorangegangenen Ansprüche **dadurch gekennzeichnet, dass** die äußere Schicht (10) stoffschlüssig mit der Außenseite (9) des mindestens einen Lenkradhüllenelementes. (4a, 4b, 5a, 5b) verbunden wird.

7. Verfahren nach einem der vorangegangenen Ansprüche, **dadurch gekennzeichnet, dass** das mindestens eine Lenkradhüllenelement (4a, 4b, 5a, 5b) über seine Innenseite (8) formschlüssig mit dem Lenkradskelett (S) verbunden wird.

8. Verfahren nach einem der vorangegangenen Ansprüche, **dadurch gekennzeichnet, dass** das mindestens eine Lenkradhüllenelement (4a, 4b, 5a, 5b) über seine Innenseite (8) stoffschlüssig mit dem Lenkradskelett (S) verbunden wird.

9. Verfahren nach einem der Ansprüche 1 bis 7, **dadurch gekennzeichnet, dass** das mindestens eine Lenkradhüllenelement (4a, 4b, 5a, 5b) über seine Innenseite (8) kraftschlüssig mit dem Lenkradskelett (S) verbunden wird.

10. Verfahren nach einem der vorangegangenen Ansprüche, **dadurch gekennzeichnet, dass** eine Mehrzahl an Lenkradhüllenelementen (4a, 4b, 5a, 5b) bereitgestellt wird.

11. Verfahren nach Anspruch 10, **dadurch gekennzeichnet, dass** die einzelnen Lenkradhüllenelemente (4a, 4b, 5a, 5b) verschiedenen Bereichen des Lenkradskeletts (S) zugeordnet werden.

12. Verfahren nach einem der vorangegangenen Ansprüche, **dadurch gekennzeichnet, dass** die äußere Schicht (10) aus einer Mehrzahl von Schichtelementen (10a) ausgebildet wird.

13. Verfahren nach Anspruch 10 oder 11 und Anspruch 12, **dadurch gekennzeichnet, dass** den einzelnen Lenkradhüllenelementen (4a, 4b, 5a, 5b) jeweils zumindest eines der Schichtelemente (10a) zugeordnet wird.

14. Verfahren nach Anspruch 12 oder 13, **dadurch gekennzeichnet, dass** die Schichtelemente (10a) derart ausgebildet werden, dass sie die Außenseiten (9) der Lenkradhüllenelemente (4a, 4b, 5a, 5b) nach dem Verbinden der Schichtelemente (10a) mit den Außenseiten (9) der Lenkradhüllenelemente (4a, 4b, 5a, 5b) überdecken.

15. Verfahren nach Anspruch 10 oder 11 und einem der Ansprüche 12 bis 14, **dadurch gekennzeichnet, dass** nach dem Befestigen zweier Lenkradhüllenelemente (4a, 4b, 5a, 5b) an dem Lenkradskelett (S) ein Einlegeelement (14) in einem Spalt (T) angeordnet wird, der durch einander zugewandte Seiten zweier jeweils an den beiden Lenkradhüllenelementen (4a, 4b, 5a, 5b) befestigter Schichtelemente (10a) gebildet wird.

16. Verfahren nach einem der vorangegangenen Ansprüche, **dadurch gekennzeichnet, dass** nach dem Befestigen eines Lenkradhüllenelementes (4a, 4b, 5a, 5b) an dem Lenkradskelett (S) ein Einlegeelement (14) in einem Spalt (T) angeordnet wird, der durch einander zugewandten Seiten der an dem Lenkradhüllenelement (4a, 4b, 5a, 5b) befestigten äußeren Schicht (10) gebildet wird.

17. Verfahren nach Anspruch 15 oder 16, **dadurch gekennzeichnet, dass** das Einlegeelement (14) formschlüssig mit dem Spalt (T) ausgebildet wird.

18. Verfahren nach einem der vorangegangenen Ansprüche, **dadurch gekennzeichnet, dass** die Querschnittskontur des Lenkradskeletts (S) derart ausgebildet wird, dass sie von einer kreisförmigen Querschnittskontur abweicht.

19. Verfahren nach Anspruch 18, **dadurch gekennzeichnet, dass** die Querschnittskontur polygonförmig, insbesondere rechteckförmig ausgebildet wird.

20. Verfahren nach Anspruch einem der vorangegangenen Ansprüche **dadurch gekennzeichnet, dass** der Schritt des Bereitstellens des Lenkradskeletts (S) die folgenden Schritte vorsieht:
- Bereitstellen eines Kerns (K) des Lenkradskeletts (S), insbesondere aus einem Metall, und
- Umgeben des Kerns (K) mit einem Mantel (V), insbesondere aus einem Schaum, zum Ausbilden des Lenkradskeletts (S), so dass der Mantel (V) den Kern (K) zumindest abschnittsweise im Querschnitt vollständig umgibt.

21. Verfahren nach einem der vorangegangenen Ansprüche, **dadurch gekennzeichnet, dass** am Lenkradskelett (S) vom Lenkradskelett (S) abragende Vorsprünge (A) ausgebildet werden, die dazu eingerichtet und vorgesehen sind, in entsprechende Ausnehmungen einer Innenseite (8) des zumindest einen Lenkradhüllenelementes (4a, 4b, 5a, 5b) einzugreifen.

22. Verfahren nach Anspruch 21, **dadurch gekennzeichnet, dass** die Vorsprünge (A) an demjenigen Teil (1) des Lenkradskeletts (S) ausgebildet werden, der einen Grundkörper für den Lenkradkranz des Lenkrades bildet.

23. Verfahren nach Anspruch 20 und einem der Ansprüche 21 oder 22, **dadurch gekennzeichnet, dass** die Vorsprünge (A) einstückig mit dem Mantel (V) ausgebildet werden.

24. Verfahren nach einem der vorangegangenen Ansprüche, **dadurch gekennzeichnet, dass** eine nach außen gewandte Außenseite (20) des Lenkradskeletts (S) eine rauhe und / oder genarbte Oberflächenstruktur erhält.

25. Verfahren nach einem der Ansprüche 7 bis 9 oder nach Anspruch 21 oder einem der Ansprüche 22 bis 24 soweit rückbezogen auf Anspruch 21, **dadurch gekennzeichnet, dass** die Innenseite (8) eine rauhe und / oder genarbte Oberflächenstruktur erhält.

26. Lenkrad für ein Kraftfahrzeug, mit:
- einem Lenkradskelett als einem Grundkörper des Lenkrades,
- einem oder mehreren am Lenkradskelett befestigten Lenkradhüllenelementen als Träger einer äußeren, sichtbaren Schicht des Lenkrades, die in ihrer Gesamtheit zumindest einen Teilbereich des Lenkradskeletts im Wesentlichen vollständig umgreifen und jeweils eine dem Lenkradskelett zugewandte Innenseite und eine der Innenseite abgewandte Außenseite aufweisen, und
- einer äußeren Schicht, die mit der Außenseite des mindestens einen Lenkradhüllenelementes verbunden ist, wobei die äußere Schicht zumindest einen Teilbereich des Lenkradskeletts im Wesentlichen vollständig umgreift,
- wobei das mindestens eine Lenkradhüllenelement (4a, 4b, 5a, 5b ) dazu eingerichtet und vorgesehen ist, am Lenkradskelett (S) angeordnet und befestigt zu werden, nachdem die äußere Schicht (10) mit der Außenseite (9) des mindestens einen Lenkradhüllenelementes (4a, 4b, 5a, 5b) verbunden worden ist.
**dadurch gekennzeichnet,**
**dass** das mindestens eine Lenkradhüllenelement (4a, 4b, 5a, 5b) zwei einander gegenüberliegende und einstückig miteinander verbundene Schenkel (7a, 7b) aufweist, die zum Umgreifen des Lenkradskeletts (S) auseinander gebogen werden können.

27. Lenkrad nach Anspruch 26, **dadurch gekennzeichnet, dass** die äußere Schicht (10) die Außenseite (9) des mindestens einen Lenkradhüllenelementes (4a, 4b, 5a, 5b) überdeckt.

28. Lenkrad nach einem der Ansprüche 26 oder 27, **dadurch gekennzeichnet, dass** die Gesamtheit der Lenkradhüllenelemente (4a, 4b, 5a, 5b) das Lenkradskelett (S) im Wesentlichen vollständig umgibt.

29. Lenkrad nach einem der Ansprüche 26 bis 28, **dadurch gekennzeichnet, dass** die äußere Schicht (10) aus einem flexiblen Material, insbesondere aus einem Leder besteht.

30. Lenkrad nach einem der Ansprüche 26 bis 29, **dadurch gekennzeichnet, dass** die äußere Schicht (10) stoffschlüssig mit der Außenseite (9) des mindestens einen Lenkradhüllenelementes (4a, 4b, 5a, 5b) verbunden ist.

31. Lenkrad nach einem der Ansprüche 26 bis 30, **dadurch gekennzeichnet, dass** die Innenseite (8) des mindestens einen Lenkradhüllenelements (4a, 4b, 5a, 5b) formschlüssig am Lenkradskelett (S) anliegt.

32. Lenkrad nach einem der Ansprüche 26 bis 31, **dadurch gekennzeichnet, dass** die beiden Schenkel (7a, 7b) jeweils ein freies Enden (7c, 7d) aufweisen, die aneinander anliegen, so dass das mindestens eine Lenkradhüllenelement (4a) das Lenkradskelett (S) umschließt.

33. Lenkrad nach einem der Ansprüche 26 bis 32, **gekennzeichnet durch** eine Mehrzahl an Lenkradhüllenelementen (4a, 4b, 5a, 5b).

34. Lenkrad nach Anspruch 33, **dadurch gekennzeichnet, dass** ein erstes Lenkradhüllenelement (4a) sich entlang eines halben Umfangs eines in sich geschlossenen Lenkradkranzskeletts (1) des Lenkradskeletts (S) erstreckt.

35. Lenkrad nach 34, **dadurch gekennzeichnet, dass** das erste Lenkradhüllenelement (4a) das Lenkradkranzskelett (1) zumindest abschnittsweise im Wesentlichen umgreift.

36. Lenkrad nach einem der Ansprüche 33 bis 35, **dadurch gekennzeichnet, dass** ein zweites Lenkradhüllenelement (5a) vorgesehen ist, dass sich entlang zumindest einer ersten Strebe (3a) des Lenkradskeletts (S) erstreckt, die zum Verbinden des Lenkradkranzskeletts (1) mit einer Nabe (2) des Lenkrades dient.

37. Lenkrad nach Anspruch 36, **dadurch gekennzeichnet, dass** das zweite Lenkradhüllenelement (5a) die erste Strebe (3a) zumindest abschnittsweise im Wesentlichen umgreift.

38. Lenkrad nach Anspruch 36 oder 37, **dadurch gekennzeichnet, dass** das zweite Lenkradhüllenelement (5a) sich entlang der ersten Strebe (3a) und entlang einer weiteren zweiten Strebe (3c) erstreckt, die zum Verbinden des Lenkradkranzskeletts (1) mit der Nabe (2) des Lenkrades dient, und dass das zweite Lenkradhüllenelement (5a) einen Bereich des Lenkradkranzskeletts (1) zwischen den beiden Streben (3a, 3c) entlang des Lenkradkranzskeletts (1) überdeckt.

39. Lenkrad einem der Ansprüche 36 bis 38, **dadurch gekennzeichnet, dass** das zweite Lenkradhüllenelement (5a) derart ausgebildet wird, dass es die zweite Strebe (3c) in seinem Befestigungszustand zumindest abschnittsweise im Wesentlichen umgreift.

40. Lenkrad nach einem der Ansprüche 33 bis 39, **dadurch gekennzeichnet, dass** ein drittes Lenkradhüllenelement (4b) vorgesehen ist, dass spiegelsymmetrisch zum ersten Lenkradhüllenelement (4a) ausgebildet und am Lenkradskelett (S) festgelegt ist.

41. Lenkrad nach einem der Ansprüche 36 bis 40, **dadurch gekennzeichnet, dass** ein viertes Lenkradhüllenelement (5b) vorgesehen ist, dass spiegelsymmetrisch zum zweiten Lenkradhüllenelement (5a) ausgebildet und am Lenkradskelett (S) festgelegt ist.

42. Lenkrad nach einem der Ansprüche 33 bis 41, **dadurch gekennzeichnet, dass** eines der Lenkradhüllenelemente (7) mittels zumindest eines an seiner Innenseite (8) festgelegten Rastmittels (15) am Lenkradskelett (S) befestigt ist.

43. Lenkrad nach Anspruch 42, **dadurch gekennzeichnet, dass** das Rastmittel (15) zum Verbinden des einen Lenkradhüllenelementes (7) mit dem Lenkradskelett (S) in eine Aussparung (16) des Lenkradskeletts (S) eingreift.

44. Lenkrad nach einem der Ansprüche 35 bis 43, **dadurch gekennzeichnet, dass** das Lenkradskelett (S) im Querschnitt U-förmig ausgebildet ist.

45. Lenkrad nach den Ansprüchen 43 und 44, **dadurch gekennzeichnet, dass** die Aussparung (16) derart am im Querschnitt U-förmigen Lenkradskelett (S) ausgebildet ist, dass ein freier Schenkel (1a) des U-förmig ausgebildeten Lenkradskeletts (S) der Aussparung (16) entlang einer mit der Aussparung (16) fluchtenden Montagerichtung (M) gegenüberliegt.

46. Lenkrad nach einem der Ansprüche 26 bis 45, **dadurch gekennzeichnet, dass** die äußere Schicht (10) eine Mehrzahl von Schichtelementen (10a) umfasst.

47. Lenkrad nach Anspruch 46, **dadurch gekennzeichnet, dass** jeweils mindestens ein Schichtelement (10a) mit der Außenseite (9) eines Lenkradhüllenelementes (4a, 4b, 5a, 5b, 7) verbunden ist.

48. Lenkrad nach den Ansprüchen 46 und 47, **dadurch gekennzeichnet, dass** jeweils mindestens ein Schichtelement (10a) derart mit der Außenseite (9) eines Lenkradhüllenelementes (4a, 4b, 5a, 5b, 7) verbunden ist, dass die Außenseite (9) des Lenkradhüllenelementes im Wesentlichen vollständig überdeckt ist.

49. Lenkrad nach einem der Ansprüche 26 bis 48, **dadurch gekennzeichnet, dass** zumindest ein Einlegeelement (14) vorgesehen ist, das in einem Spalt (T) der äußeren Schicht (10) angeordnet ist.

50. Lenkrad nach einem der Ansprüche 46 bis 48 und Anspruch 49, **dadurch gekennzeichnet, dass** der Spalt (T) zwischen angrenzenden Bereichen eines oder mehrerer Schichtelemente (10a) angeordnet ist.

51. Lenkrad nach einem der Ansprüche 26 bis 50, **dadurch gekennzeichnet, dass** die Lenkradhüllenelemente (4a, 4b, 5a, 5b, 7) aus einem Kunststoff, insbesondere einem thermoplastischen Kunststoff, bestehen.

52. Lenkrad nach einem der Ansprüche 26 bis 50, **dadurch gekennzeichnet, dass** die Lenkradhüllenelemente (4a, 4b, 5a, 5b, 7) aus einem Schaum, insbesondere einem PU-Schaum bestehen.

53. Lenkrad nach einem der Ansprüche 26 bis 52, **dadurch gekennzeichnet, dass** das Lenkradskelett (S) eine von einer kreisförmigen Querschnittskontur abweichende Querschnittskontur aufweist.

54. Lenkrad nach Anspruch 53, **dadurch gekennzeichnet, dass** die Querschnittskontur polygonförmig, insbesondere rechteckförmig ausgebildet ist.

55. Lenkrad nach einem der Ansprüche 26 bis 54, **dadurch gekennzeichnet, dass** das Lenkradskelett einen Kern (K) aufweist, insbesondere aus einem Metall.

56. Lenkrad nach einem der Ansprüche 26 bis 55, **dadurch gekennzeichnet, dass** das Lenkradskelett (S) einen Mantel (V) aufweist, insbesondere aus einem Schaum.

57. Lenkrad nach Anspruch 55 und Anspruch 56, **dadurch gekennzeichnet, dass** der Mantel (V) den Kern (K) zumindest abschnittsweise im Querschnitt vollständig umgibt.

58. Lenkrad nach einem der Ansprüche 26 bis 57, **dadurch gekennzeichnet, dass** das Lenkradskelett (S) vom Lenkradskelett (S) abragende Vorsprünge (A) aufweist, die dazu eingerichtet und vorgesehen sind, in entsprechende Ausnehmungen (30) der Innenseite (8) des zumindest einen Lenkradhüllenelementes (4a, 4b, 5a, 5b) einzugreifen.

59. Lenkrad nach einem der Ansprüche 56 oder 57 und nach Anspruch 58, **dadurch gekennzeichnet, dass** die Vorsprünge (A) einstückig mit dem Mantel (V) ausgebildet sind.

60. Lenkrad nach einem der Ansprüche 58 oder 59, **dadurch gekennzeichnet, dass** die Vorsprünge (A) dazu eingerichtet und vorgesehen sind kraft- und / oder formschlüssig in die zugeordneten Ausnehmungen (30) eingreifen.

61. Lenkrad nach einem der Ansprüche 58 bis 60, **dadurch gekennzeichnet, dass** die Vorsprünge (A) an demjenigen Teil (1) des Lenkradskeletts (S) vorgesehen sind, der einen Grundkörper für den Lenkradkranz des Lenkrades bildet.

62. Lenkrad nach Anspruch 61, **dadurch gekennzeichnet, dass** die Vorsprünge (A) den einen Teil (1) des Lenkradskeletts (S) im Querschnitt umlaufen.

63. Lenkrad nach einem der Ansprüche 26 bis 62, **dadurch gekennzeichnet, dass** eine nach außen gewandte Außenseite (20) des Lenkradskeletts (S) eine rauhe und /oder genarbte Oberflächenstruktur aufweist.

64. Lenkrad nach einem der Ansprüche 26 bis 63, **dadurch gekennzeichnet, dass** die Innenseite (8) eine rauhe und / oder genarbte Oberflächenstruktur aufweist.

65. Lenkrad nach einem der Ansprüche 26 bis 64, **dadurch gekennzeichnet, dass** das mindestens eine Lenkradhüllenelement (4a) das Lenkradskelett (S), insbesondere das Lenkradkranzskelett (1), vollständig einstückig im Querschnitt umgreift.

## Claims

1. Method for producing a steering wheel, comprising the following steps:
- provision of a steering wheel skeleton (S) as a body of the steering wheel to be produced,
- provision of one or more steering wheel covering elements (4a, 4b, 5a, 5b) to be fixed to the steering wheel skeleton (S) as carriers for an outer, visible layer (10) of the steering wheel, all of the steering wheel covering elements (4a, 4b, 5a, 5b) together in the fixed state in essence completely enclosing at least a partial area of the steering wheel skeleton (S) and the steering wheel covering elements (4a, 4b, 5a, 5b) each having an inside (8) facing the steering wheel skeleton (S) and an outside (9) remote from the inside (8),
- joining an outer layer (10) to the outside (9) of the at least one steering wheel covering element (4a, 4b, 5a, 5b), the outer layer (10) in the fixed state of the at least one steering wheel covering element (4a, 4b, 5a, 5b) in essence completely enclosing at least a partial area of the steering wheel skeleton (S), and
- arrangement and fixing of the at least one steering wheel covering element (4a, 4b, 5a, 5b) on the steering wheel skeleton (S) once the outer layer (10) has been joined to the outside (9) of the at least one steering wheel covering element (4a, 4b, 5a, 5b), **characterized in that** the at least one steering wheel covering element (4a, 4b, 5a, 5b) has two opposing legs (7a, 7b) integrally joined to one another, which are bent apart to enclose the steering wheel skeleton (S).

2. Method according to claim 1, **characterized in that** the outer layer (10) is formed in such a way that after joining to the outside (9) it covers the outside (9) of the at least one steering wheel covering element (4a, 4b, 5a, 5b).

3. Method according to either of claims 1 or 2, **characterized in that** one or more of the steering wheel covering elements (4a, 4b, 5a, 5b) is/are fixed to the steering wheel skeleton (S) in such a way that all of the steering wheel covering elements (4a, 4b, 5a, 5b) together in essence completely enclose the steering wheel skeleton (S).

4. Method according to one of claims 1 to 3, **characterized in that** the outer layer (10) is formed from a flexible material, in particular from a leather.

5. Method according to one of the preceding claims, **characterized in that** the outer layer (10) has an inside (11), which is intended for joining to the outside (9) of the at least one steering wheel covering element (4a, 4b, 5a, 5b) and that the inside (11) is preformed in such a way that in essence it conforms to a three dimensional profile of the outside (9) of the at least one steering wheel covering element (4a, 4b, 5a, 5b).

6. Method according to one of the preceding claims, **characterized in that** the outer layer (10) is joined to the outside (9) of the at least one steering wheel covering element (4a, 4b, 5a, 5b) by a materially fused connection.

7. Method according to one of the preceding claims, **characterized in that** the at least one steering wheel covering element (4a, 4b, 5a, 5b) is joined by its inside (8) positively interlocking with the steering wheel skeleton (S).

8. Method according to one of the preceding claims, **characterized in that** the at least one steering wheel covering element (4a, 4b, 5a, 5b) is joined by its inside (8) materially fusing with the steering wheel skeleton (S).

9. Method according to one of claims 1 to 7,
**characterized in that** the at least one steering wheel covering element (4a, 4b, 5a, 5b) is joined by its inside (8) forming a frictional connection with the steering wheel skeleton (S).

10. Method according to one of the preceding claims, **characterized in that** multiple steering wheel covering elements (4a, 4b, 5a, 5b) are provided.

11. Method according to claim 10, **characterized in that** the individual steering wheel covering elements (4a, 4b, 5a, 5b) are assigned to different areas of the steering wheel skeleton (S).

12. Method according to one of the preceding claims, **characterized in that** the outer layer (10) is formed from multiple layer elements (10a).

13. Method according to claim 10 or 11 and claim 12, **characterized in that** at least one of the layer elements (10a) is assigned to each of the individual steering wheel covering elements (4a, 4b, 5a, 5b).

14. Method according to claim 12 or 13,
**characterized in that** the layer elements (10a) are designed in such a way that after joining the layer elements (10a) to the outsides (9) of the steering wheel covering elements (4a, 4b, 5a, 5b) they cover the outsides (9) of the steering wheel covering elements (4a, 4b, 5a, 5b).

15. Method according to claim 10 or 11 and one of claims 12 to 14, **characterized in that** after fixing two steering wheel covering elements (4a, 4b, 5a, 5b) to the steering wheel skeleton (S), an insert (14) is arranged in a gap (T), which is formed by opposing sides of two layer elements (10a) each fixed to the two steering wheel covering elements (4a, 4b, 5a, 5b).

16. Method according to one of the preceding claims, **characterized in that** after fixing a steering wheel covering element (4a, 4b, 5a, 5b) to the steering wheel skeleton (S), an insert (14) is arranged in a gap (T), which is formed by opposing sides of the outer layer (10) fixed to the steering wheel covering element (4a, 4b, 5a, 5b).

17. Method according to claim 15 or 16, **characterized in that** the insert (14) is designed to interlock positively with the gap (T).

18. Method according to one of the preceding claims, **characterized in that** the cross sectional contour of the steering wheel skeleton (S) is formed in such a way that it deviates from a circular cross sectional contour.

19. Method according to claim 18, **characterized in that** the cross sectional contour is of polygonal, especially rectangular shape.

20. Method according to one of the preceding claims, **characterized in that** the step of providing the steering wheel skeleton (S) comprises the following steps:
- provision of a core (K) for the steering wheel skeleton (S), especially one made up of metal, and
- enclosure of the core (K) in a casing (V), especially one made up of a foam, in order to form the steering wheel skeleton (S), so that the casing (V), at least in sections, completely encloses the cross section of the core (K).

21. Method according to one of the preceding claims, **characterized in that** projections (A) protruding from the steering wheel skeleton (S) are provided on the steering wheel skeleton (S), which are designed and intended to engage in corresponding recesses in an inside (8) of the at least one steering wheel covering element (4a, 4b, 5a, 5b).

22. Method according to claim 21, **characterized in that** the projections (A) are formed on that part (1) of the steering wheel skeleton (S) which forms a body of the steering wheel rim of the steering wheel.

23. Method according to claim 20 and either of claims 21 or 22, **characterized in that** the projections (A) are integrally formed with the casing (V).

24. Method according to one of the preceding claims, **characterized in that** an outward facing outside (20) of the steering wheel skeleton (S) is endowed with a rough and/or grained surface texture.

25. Method according to one of claims 7 to 9 or claim 21 or one of claims 22 to 24, in so far as these refer to claim 21, **characterized in that** the inside (8) is endowed with a rough and/or grained surface texture.

26. Steering wheel for a motor vehicle, comprising:
- a steering wheel skeleton as a body of the steering wheel,
- one or more steering wheel covering elements fixed to the steering wheel skeleton as carriers for an outer, visible layer of the steering wheel, all of the elements together in essence completely enclosing at least a partial area of the steering wheel skeleton and the elements each having an inside facing the steering wheel skeleton and an outside remote from the inside, and
- an outer layer, which is joined to the outside of the at least one steering wheel covering element, the outer layer in essence completely enclosing at least a partial area of the steering wheel skeleton,
- the at least one steering wheel covering element (4a, 4b, 5a, 5b) being designed and intended to be arranged and fixed on the steering wheel skeleton (S) once the outer layer (10) has been joined to the outside (9) of the at least one steering wheel covering element (4a, 4b, 5a, 5b).
**characterized in that**
the at least one steering wheel covering element (4a, 4b, 5a, 5b) has two opposing legs (7a, 7b) integrally joined to one another, which can be bent apart to enclose the steering wheel skeleton (S).

27. Steering wheel according to claim 26, **characterized in that** the outer layer (10) covers the outside (9) of the at least one steering wheel covering element (4a, 4b, 5a, 5b).

28. Steering wheel according to either of claims 26 or 27, **characterized in that** all of the steering wheel covering elements (4a, 4b, 5a, 5b) together in essence completely enclose the steering wheel skeleton (S).

29. Steering wheel according to one of claims 26 to 28, **characterized in that** the outer layer (10) is made up of a flexible material, in particular a leather.

30. Steering wheel according to one of claims 26 to 29, **characterized in that** the outer layer (10) is joined to the outside (9) of the at least one steering wheel covering element (4a, 4b, 5a, 5b) by a materially fused connection.

31. Steering wheel according to one of claims 26 to 30, **characterized in that** the inside (8) of the at least one steering wheel covering element (4a, 4b, 5a, 5b) bears on the steering wheel skeleton (S) positively interlocking therewith.

32. Steering wheel according to one of claims 26 to 31, **characterized in that** the two legs (7a, 7b) each have a free end (7c, 7d), which bear against one another so that the at least one steeping wheel covering element (4a) encloses the steering wheel skeleton (S).

33. Steering wheel according to one of claims 26 to 32, **characterized by** multiple steering wheel covering elements (4a, 4b, 5a, 5b).

34. Steering wheel according to claim 33,
**characterized in that** a first steering wheel covering element (4a) extends over half of the circumference of a closed steering wheel rim skeleton (1) of the steering wheel skeleton (S).

35. Steering wheel as claimed claim 34, **characterized in that** the first steering wheel covering element (4a) in essence encloses the steering wheel rim skeleton (1), at least in sections.

36. Steering wheel according to one of claims 33 to 35, **characterized in that** a second steering wheel covering element (5a) is provided, which extends along at least a first strut (3a) of the steering wheel skeleton (S) that serves to join the steering wheel rim skeleton (1) to a hub (2) of the steering wheel.

37. Steering wheel according to claim 36, **characterized in that** the second steering wheel covering element (5a) in essence encloses the first ) strut (3a), at least in sections.

38. Steering wheel according to claim 36 or 37, **characterized in that** the second steering wheel covering element (5a) extends along the first strut (3a) and along a further, second strut (3c), which serves to join the steering wheel rim skeleton (1) to the hub (2) of the steering wheel, and that the second steering wheel covering element (5a) covers an area of the steering wheel rim skeleton (1) between the two struts (3a, 3c) along the steering wheel rim skeleton (1).

39. Steering wheel according to one of claims 36 to 38, **characterized in that** the second steering wheel covering element (5a) is designed in such a way that in its fixed state it in essence encloses the second strut (3c), at least in sections.

40. Steering wheel according to one of claims 33 to 39, **characterized in that** a third steering wheel covering element (4b) is provided, which is mirror symmetrical with the first steering wheel covering element (4a) and is fixed to the steering wheel skeleton (S).

41. Steering wheel according to one of claims 36 to 40, **characterized in that** a fourth steering wheel covering element (5b) is provided, which is mirror symmetrical with the second steering wheel covering element (5a) and is fixed to the steering wheel skeleton (S).

42. Steering wheel according to one of claims 33 to 41, **characterized in that** one of the steering wheel covering elements (7) is fixed to the steering wheel skeleton (S) by means of at least one catch (15) fixed to its inside (8).

43. Steering wheel according to claim 42, **characterized in that** the catch (15) engages in a recess (16) in the steering wheel skeleton (S) in order to join the one steering wheel covering element (7) to the steering wheel skeleton (S).

44. Steering wheel according to one of claims 35 to 43, **characterized in that** the steering wheel skeleton (S) is of U-shaped cross section.

45. Steering wheel according to claims 43 and 44, **characterized in that** the recess (16) is formed on the steering wheel skeleton (S) of U-shaped cross section in such a way that a free leg (1a) of the U-shaped steering wheel skeleton (S) is situated opposite the recess (16) in an assembly direction (M) aligning with the recess (16).

46. Steering wheel according to one of claims 26 to 45, **characterized in that** the outer layer (10) comprises a plurality of layer elements (10a).

47. Steering wheel according to claim 46, **characterized in that** at least one layer element (10a) is in each case joined to the outside (9) of a steering wheel covering element (4a, 4b, 5a, 5b, 7).

48. Steering wheel according to claims 46 and 47, **characterized in that** at least one layer element (10a) is in each case joined to the outside (9) of a steering wheel covering element (4a, 4b, 5a, 5b, 7) in such a way that the outside (9) of the steering wheel covering element is in essence completely covered.

49. Steering wheel according to one of claims 26 to 48, **characterized in that** at least one insert (14) is provided, which is arranged in a gap (T) in the outer layer (10).

50. Steering wheel according to one of claims 46 to 48 and claim 49, **characterized in that** the gap (T) is arranged between adjacent areas of one or more layer elements (10a).

51. Steering wheel according to one of claims 26 to 50, **characterized in that** the steering wheel covering elements (4a, 4b, 5a, 5b, 7) are made up of a plastic, in particular a thermoplastic.

52. Steering wheel according to one of claims 26 to 50, **characterized in that** the steering wheel covering elements (4a, 4b, 5a, 5b, 7) are made up of a foam, in particular a PU foam.

53. Steering wheel according to one of claims 26 to 52, **characterized in that** the steering wheel skeleton (S) has a cross sectional contour which deviates from a circular cross sectional contour.

54. Steering wheel according to claim 53, **characterized in that** the cross sectional contour is of polygonal, in particular rectangular, shape.

55. Steering wheel according to one of claims 26 to 54, **characterized in that** the steering wheel skeleton has a core (K), especially one made up of a metal.

56. Steering wheel according to one of claims 26 to 55, **characterized in that** the steering wheel skeleton (S) has a casing (V), especially one made up of a foam.

57. Steering wheel according to claim 55 and claim 56, **characterized in that** the casing (V) in cross section completely encloses the core (K), at least in sections.

58. Steering wheel according to one of claims 26 to 57, **characterized in that** the steering wheel skeleton (S) has projections (A) protruding from the steering wheel skeleton (S), which are designed and intended to engage in corresponding recesses (30) on the inside (8) of the at least one steering wheel covering element (4a, 4b, 5a, 5b).

59. Steering wheel according to one of claims 56 or 57 and claim 58, **characterized in that** the projections (A) are integrally formed with the casing (V).

60. Steering wheel according to either of claims 58 or 59, **characterized in that** the projections (A) are designed and intended to engage non-positively and/or by positive interlock in the associated recesses (30).

61. Steering wheel according to one of claims 58 to 60, **characterized in that** the projections (A) are provided on that part (1) of the steering wheel skeleton (S) which forms a body for the steering wheel rim of the steering wheel.

62. Steering wheel according to claim 61, **characterized in that** the projections (A) run around the cross section of the one part (1) of the steering wheel skeleton (S).

63. Steering wheel according to one of claims 26 to 62, **characterized in that** an outward facing outside (20) of the steering wheel skeleton (S) has a rough and/or grained surface texture.

64. Steering wheel according to one of claims 26 to 63, **characterized in that** the inside (8) has a rough and/or grained surface texture.

65. Steering wheel according to one of claims 26 to 64, **characterized in that** the at least one steering wheel covering element (4a) completely encloses the cross section of the steering wheel skeleton (S), in particular the steering wheel rim skeleton (1), in one piece.

## Revendications

1. Procédé de fabrication d'un volant de direction, comprenant les étapes suivantes :
- préparation d'une ossature de volant (S) en guise de corps de base du volant à fabriquer,
- préparation d'un ou plusieurs éléments d'enveloppe de volant (4a, 4b, 5a, 5b) destinés à être fixés sur l'ossature de volant (S) comme supports d'une couche visible extérieure (10) du volant, la totalité des éléments d'enveloppe de volant (4a, 4b, 5a, 5b) entourant sensiblement complètement au moins une zone partielle de l'ossature de volant (S) à l'état fixé, et les éléments d'enveloppe de volant (4a, 4b, 5a, 5b) présentant chacun une face intérieure (8) tournée vers l'ossature de volant (S) et une face extérieure (9) détournée de la face intérieure (8),
- liaison d'une couche extérieure (10) avec la face extérieure (9) dudit au moins un élément enveloppe de volant (4a, 4b, 5a, 5b), ladite couche extérieure (10), dans l'état fixé dudit au moins un élément d'enveloppe de volant (4a, 4b, 5a, 5b), entourant sensiblement complètement au moins une zone partielle de l'ossature de volant (S), et
- agencement et fixation dudit au moins un élément d'enveloppe de volant (4a, 4b, 5a, 5b) sur l'ossature de volant (S), après que la couche extérieure (10) a été reliée à la face extérieure (9) dudit au moins un élément d'enveloppe de volant (4a, 4b, 5a, 5b),
**caractérisé en ce que**
ledit au moins un élément d'enveloppe de volant (4a, 4b, 5a, 5b) comprend deux branches (7a, 7b) opposées l'une à l'autre et reliées d'un seul tenant l'une à l'autre, qui sont courbées en écartement pour entourer l'ossature de volant (S).

2. Procédé selon la revendication 1, **caractérisé en ce que** la couche extérieure (10) est réalisée de telle façon qu'elle recouvre la face extérieure (9) dudit au moins un élément d'enveloppe de volant (4a, 4b, 5a, 5b) après la liaison avec la face extérieure (9).

3. Procédé selon l'une des revendications 1 ou 2, **caractérisé en ce que** lesdits un ou plusieurs éléments d'enveloppe de volant (4a, 4b, 5a, 5b) sont fixés sur l'ossature de volant (S) de telle façon que la totalité des éléments d'enveloppe de volant (4a, 4b, 5a, 5b) entourent sensiblement complètement l'ossature de volant (S).

4. Procédé selon l'une des revendications 1 à 3, **caractérisé en ce que** la couche extérieure (10) est réalisée en un matériau flexible, en particulier en cuir.

5. Procédé selon l'une des revendications précédentes, **caractérisé en ce que** la couche extérieure (10) présente une face intérieure (11), qui est prévue pour la liaison avec la face extérieure (9) dudit au moins un élément d'enveloppe de volant (4a, 4b, 5a, 5b), et **en ce que** la face intérieure (11) est préformée de telle façon qu'elle suit sensiblement un tracé dans l'espace de la face extérieure (9) dudit au moins un élément d'enveloppe de volant (4a, 4b, 5a, 5b).

6. Procédé selon l'une des revendications précédentes, **caractérisé en ce que** la couche extérieure (10) est relié en coopération de matières avec la face extérieure (9) dudit au moins un élément d'enveloppe de volant (4a, 4b, 5a, 5b).

7. Procédé selon l'une des revendications précédentes, **caractérisé en ce que** ledit au moins un élément d'enveloppe de volant (4a, 4b, 5a, 5b) est relié par sa face intérieure (8) en coopération de formes avec l'ossature de volant (S).

8. Procédé selon l'une des revendications précédentes, **caractérisé en ce que** ledit au moins un élément d'enveloppe de volant (4a, 4b, 5a, 5b) est relié par sa face intérieure (8) en coopération de matières avec l'ossature de volant (S).

9. Procédé selon l'une des revendications 1 à 7, **caractérisé en ce que** ledit au moins un élément d'enveloppe de volant (4a, 4b, 5a, 5b) est relié par sa face intérieure (8) en coopération de forces avec l'ossature de volant (S).

10. Procédé selon l'une des revendications précédentes, **caractérisé en ce que** l'on prépare une pluralité d'éléments d'enveloppe de volant (4a, 4b, 5a, 5b).

11. Procédé selon la revendication 10, **caractérisé en ce que** les éléments d'enveloppe de volant (4a, 4b, 5a, 5b) individuels sont associés à diverses zones de l'ossature de volant (S).

12. Procédé selon l'une des revendications précédentes, **caractérisé en ce que** la couche extérieure (10) est réalisée à partir d'une pluralité d'éléments de couche (10a).

13. Procédé selon la revendication 10 ou 11 et la revendication 12, **caractérisé en ce que** l'un au moins des éléments de couche (10a) respectif est associé aux éléments d'enveloppe de volant (4a, 4b, 5a, 5b) individuels.

14. Procédé selon la revendication 12 ou 13, **caractérisé en ce que** les éléments de couche (10a) sont réalisés de telle façon qu'ils recouvrent les faces extérieures (9) des éléments d'enveloppe de volant (4a, 4b, 5a, 5b) après la liaison des éléments de couche (10a) avec les faces extérieures (9) des éléments d'enveloppe de volant (4a, 4b, 5a, 5b).

15. Procédé selon la revendication 10 ou 11 et l'une des revendications 12 à 14, **caractérisé en ce que,** après la fixation de deux éléments d'enveloppe de volant (4a, 4b, 5a, 5b) sur l'ossature de volant (S), un élément d'insert (14) est agencé dans une fente (T) qui est formée par les côtés, tournés l'un vers l'autre, de deux éléments de couche (10a) fixés chacun sur les deux éléments d'enveloppe de volant (4a, 4b, 5a, 5b).

16. Procédé selon l'une des revendications précédentes, **caractérisé en ce que,** après la fixation d'un élément d'enveloppe de volant (4a, 4b, 5a, 5b) sur l'ossature de volant (S), un élément d'insert (14) est agencé dans une fente (T) qui est formée par deux côtés, tournés l'un vers l'autre, de la couche extérieure (10) fixée à l'élément d'enveloppe de volant (4a, 4b, 5a, 5b).

17. Procédé selon la revendication 15 ou 16, **caractérisé en ce que** l'élément d'insert (14) est réalisé en coopération de forme avec la fente (T).

18. Procédé selon l'une des revendications précédentes, **caractérisé en ce que** le contour de section transversale de l'ossature de volant (S) est réalisé de telle façon qu'il s'écarte d'un contour de section transversale circulaire.

19. Procédé selon la revendication 18, **caractérisé en ce que** le contour de section transversale est réalisé sous forme polygonale, en particulier sous forme rectangulaire.

20. Procédé selon l'une des revendications précédentes, **caractérisé en ce que** l'étape de préparation de l'ossature de volant (S) comporte les étapes suivantes :
-- préparation d'un noyau (K) de l'ossature de volant (S), en particulier en métal, et
-- enrobage du noyau (K) avec un revêtement (V), en particulier en mousse, pour réaliser l'ossature de volant (S), de sorte que le revêtement (V) entoure entièrement le noyau (K), au moins par tronçons en section transversale.

21. Procédé selon l'une des revendications précédentes, **caractérisé en ce que** des saillies (A), qui dépassent de l'ossature de volant (S), sont réalisées sur l'ossature de volant (S), ces saillies étant conçues et prévues pour s'engager dans des évidements correspondants d'une face intérieure (8) dudit au moins un élément d'enveloppe de volant (4a, 4b, 5a, 5b).

22. Procédé selon la revendication 21, **caractérisé en ce que** les saillies (A) sont réalisées sur la partie (1) de l'ossature de volant (S) qui forme un corps de base pour la couronne du volant.

23. Procédé selon la revendication 20 et l'une des revendications 21 ou 22, **caractérisé en ce que** les saillies (A) sont réalisées d'un seul tenant avec le revêtement (V).

24. Procédé selon l'une des revendications précédentes, **caractérisé en ce qu'**une face extérieure (20), tournée vers l'extérieur, de l'ossature de volant (S) présente une structure de surface rugueuse et/ou granuleuse.

25. Procédé selon l'une des revendications 7 à 9 ou selon la revendication 21 ou l'une des revendications 22 à 24 prise en dépendance de la revendication 21, **caractérisé en ce que** la face intérieure (8) présente une structure de surface rugueuse et/ou granuleuse.

26. Volant de direction pour véhicule automobile, comprenant :
- une ossature de volant comme corps de base du volant,
- un ou plusieurs éléments d'enveloppe de volant, fixés sur l'ossature de volant, comme supports d'une couche visible extérieure du volant, qui dans leur totalité entourent sensiblement totalement au moins une zone partielle de l'ossature de volant et présentent chacun une face intérieure tournée vers l'ossature de volant et une face extérieure détournée de la face intérieure, et
- une couche extérieure, reliée à la face extérieure dudit au moins un élément d'enveloppe de volant, ladite couche extérieure entourant sensiblement complètement au moins une zone partielle de l'ossature de volant,
- ledit au moins un élément d'enveloppe de volant (4a, 4b, 5a, 5b) étant conçu et prévu pour être agencé et fixé sur l'ossature de volant (S) après avoir relié la couche extérieure (10) avec la face extérieure (9) dudit au moins un élément d'enveloppe de volant (4a, 4b, 5a, 5b),
**caractérisé en ce que** ledit au moins un élément d'enveloppe de volant (4a, 4b, 5a, 5b) comprend deux branches (7a, 7b), opposés l'une à l'autre et reliées d'une seule pièce l'une avec l'autre, qui peuvent être courbées en écartement pour entourer l'ossature de volant (S).

27. Volant de direction selon la revendication 26, **caractérisé en ce que** la couche extérieure (10) recouvre la face extérieure (9) dudit au moins un élément d'enveloppe de volant (4a, 4b, 5a, 5b).

28. Volant de direction selon l'une des revendications 26 ou 27, **caractérisé en ce que** la totalité des éléments d'enveloppe de volant (4a, 4b, 5a, 5b) enveloppent sensiblement totalement l'ossature de volant (S).

29. Volant de direction selon l'une des revendications 26 à 28, **caractérisé en ce que** la couche extérieure (10) est en un matériau flexible, en particulier en cuir.

30. Volant de direction selon l'une des revendications 26 à 29, **caractérisé en ce que** la couche extérieure (10) est reliée en coopération de matières avec la face extérieure (9) dudit au moins un élément d'enveloppe de volant (4a, 4b, 5a, 5b).

31. Volant de direction selon l'une des revendications 26 à 30, **caractérisé en ce que** la face intérieure (8) dudit au moins un élément d'enveloppe de volant (4a, 4b, 5a, 5b) est appliquée en coopération de formes contre l'ossature de volant (S).

32. Volant de direction selon l'une des revendications 26 à 31, **caractérisé en ce que** les deux branches (7a, 7b) présentent chacune une extrémité libre (7c, 7d), qui sont appliquées l'une contre l'autre, de sorte que ledit au moins un élément d'enveloppe de volant (4a) entoure l'ossature de volant (S).

33. Volant de direction selon l'une des revendications 26 à 32, **caractérisé par** une pluralité d'éléments d'enveloppe de volant (4a, 4b, 5a, 5b).

34. Volant de direction selon la revendication 33, **caractérisé en ce qu'**un premier élément d'enveloppe de volant (4a) s'étend le long d'une moitié de la périphérie d'une ossature fermée (1) de la couronne de l'ossature de volant (S).

35. Volant de direction selon la revendication 34, **caractérisé en ce que** le premier élément d'enveloppe de volant (4a) entoure sensiblement complètement l'ossature (1) de la couronne de volant, au moins par tronçons.

36. Volant de direction selon l'une des revendications 33 à 35, **caractérisé en ce qu'**il est prévu un deuxième élément d'enveloppe de volant (5a), qui s'étend le long d'au moins un premier rayon (3a) de l'ossature de volant (S), qui sert à relier l'ossature (1) de la couronne de volant à un moyeu (2) du volant.

37. Volant de direction selon la revendication 36, **caractérisé en ce que** le deuxième élément d'enveloppe de volant (5a) entoure sensiblement totalement le premier rayon (3a), au moins par tronçons.

38. Volant de direction selon la revendication 36 ou 37, **caractérisé en ce que** le deuxième élément d'enveloppe de volant (5a) s'étend le long du premier rayon (3a) et le long d'un deuxième rayon (3c), qui sert à relier l'ossature (1) de la couronne de volant au moyeu (2) du volant, et **en ce que** le deuxième élément d'enveloppe de volant (5a) recouvre une zone de l'ossature (1) de la couronne de volant entre les deux rayons (3a, 3c) le long de l'ossature (1) de la couronne de volant.

39. Volant de direction selon l'une des revendications 36 à 38, **caractérisé en ce que** le deuxième élément d'enveloppe de volant (5a) est réalisé de telle façon qu'il entoure sensiblement complètement le deuxième rayon (3c) dans son état de fixation, au moins par tronçons.

40. Volant de direction selon l'une des revendications 33 à 39, **caractérisé en ce qu'**il est prévu un troisième élément d'enveloppe de volant (4b), qui est réalisé symétrique du premier élément d'enveloppe de volant (4a) et qui est fixé sur l'ossature de volant (S).

41. Volant de direction selon l'une des revendications 36 à 40, **caractérisé en ce qu'**il est prévu un quatrième élément d'enveloppe de volant (5b), qui est réalisé symétrique du deuxième élément d'enveloppe de volant (5a) et qui est fixé sur l'ossature de volant (S).

42. Volant de direction selon l'une des revendications 33 à 41, **caractérisé en ce que** l'un des éléments d'enveloppe de volant (7) est fixé à l'ossature de volant (S) au moyen d'au moins un organe d'enclenchement (15) fixé sur sa face intérieure (8).

43. Volant de direction selon la revendication 42, **caractérisé en ce que** l'organe d'enclenchement (15) s'engage dans un évidement (16) de l'ossature de volant (S) pour relier ledit un élément d'enveloppe de volant (7) à l'ossature de volant (S).

44. Volant de direction selon l'une des revendications 35 à 43, **caractérisé en ce que** l'ossature de volant (S) est réalisée en section transversale en forme de U.

45. Volant de direction selon les revendications 43 et 44, **caractérisé en ce que** l'évidement (16) est réalisé dans l'ossature de volant (S) à section en forme de U de telle manière qu'une branche libre (1a) de l'ossature de volant (S) réalisée en forme de U est opposée à l'évidement (16) le long d'une direction de montage (M) alignée avec l'évidement (16).

46. Volant de direction selon l'une des revendications 26 à 45, **caractérisé en ce que** la couche extérieure (10) comprend une pluralité d'éléments de couche (10a).

47. Volant de direction selon la revendication 46, **caractérisé en ce qu'**au moins un élément de couche respectif (10a) est relié à la face extérieure (9) d'un élément d'enveloppe de volant (4a, 4b, 5a, 5b, 7).

48. Volant de direction selon les revendications 46 et 47, **caractérisé en ce qu'**au moins un élément de couche (10a) respectif est relié à la face extérieure (9) d'un élément d'enveloppe de volant (4a, 4b, 5a, 5b, 7) de telle manière que la face extérieure (9) de l'élément d'enveloppe de volant est sensiblement totalement recouverte.

49. Volant de direction selon l'une des revendications 26 à 48, **caractérisé en ce qu'**il est prévu au moins un élément d'insert (14) qui est agencé dans une fente (T) de la couche extérieure (10).

50. Volant de direction selon l'une des revendications 46 à 48 et la revendications 49, **caractérisé en ce que** la fente (T) est agencée entre les zones adjacentes d'un ou plusieurs éléments de couche (10a).

51. Volant de direction selon l'une des revendications 26 à 50, **caractérisé en ce que** les éléments d'enveloppe de volant (4a, 4b, 5a, 5b, 7) sont en matière plastique, en particulier en matière thermoplastique.

52. Volant de direction selon l'une des revendications 26 à 50, **caractérisé en ce que** les éléments d'enveloppe de volant (4a, 4b, 5a, 5b, 7) sont en mousse, en particulier en mousse de polyuréthane.

53. Volant de direction selon l'une des revendications 26 à 52, **caractérisé en ce que** l'ossature de volant (S) comporte un contour de section transversale qui diffère d'un contour de section transversale circulaire.

54. Volant de direction selon la revendication 53, **caractérisé en ce que** le contour de section transversale est réalisé de forme polygonale, en particulier de forme rectangulaire.

55. Volant de direction selon l'une des revendications 26 à 54, **caractérisé en ce que** l'ossature de volant comprend un noyau (K), en particulier en métal.

56. Volant de direction selon l'une des revendications 26 à 55, **caractérisé en ce que** l'ossature de volant (S) comprend un revêtement (V), en particulier en mousse.

57. Volant de direction selon les revendications 55 et 56, **caractérisé en ce que** le revêtement (V) entoure en section totalement le noyau (K), au moins par tronçons.

58. Volant de direction selon l'une des revendications 26 à 57, **caractérisé en ce que** l'ossature de volant (S) comprend des saillies (A) qui dépassent depuis l'ossature de volant (S) et qui sont conçues et prévues pour s'engager dans des évidements correspondants (30) de la face intérieure (8) dudit au moins un élément d'enveloppe de volant (4a, 4b, 5a, 5b).

59. Volant de direction selon l'une des revendications 56 ou 57, ou selon la revendication 58, **caractérisé en ce que** les saillies (A) sont réalisées d'un seul tenant avec le revêtement (V).

60. Volant de direction selon l'une des revendications 58 ou 59, **caractérisé en ce que** les saillies (A) sont conçues et prévues pour s'engager en coopération de forces et/ou en coopération de formes dans les évidements associés (30).

61. Volant de direction selon l'une des revendications 58 à 60, **caractérisé en ce que** les saillies (A) sont prévues sur la partie (1) de l'ossature de volant (S) qui forme un corps de base pour la couronne du volant de direction.

62. Volant de direction selon la revendication 61, **caractérisé en ce que** les saillies (A) entourent en section ladite partie (1) de l'ossature de volant (S).

63. Volant de direction selon l'une des revendications 26 à 62, **caractérisé en ce qu'**une face extérieure (20), tournée vers l'extérieur, de l'ossature de volant (S) présente une structure de surface rugueuse et/ou granuleuse.

64. Volant de direction selon l'une des revendications 26 à 63, **caractérisé en ce que** la face intérieure (8) présente une structure de surface rugueuse et/ou granuleuse.

65. Volant de direction selon l'une des revendications 26 à 64, **caractérisé en ce que** ledit au moins un élément d'enveloppe de volant (4a) entoure l'ossature de volant (S), en particulier l'ossature (1) de la couronne du volant, entièrement et d'un seul tenant en section transversale.
